# EUROPÄISCHE PATENTSCHRIFT

(11) **EP 2 542 801 B1**
(45) Veröffentlichungstag und Bekanntmachung des Hinweises auf die Patenterteilung: **23.05.2018**
(21) Anmeldenummer: 11704025.3
(22) Anmeldetag: 14.02.2011
(51) Int. Cl.: F16H 37/04, F16H 3/72, F16H 37/08, F16H 47/04

(54) **GETRIEBE**
GEARBOX
BOÌTE DE VITESSES

(30) Priorität: 01.03.2010 DE 102010010663
(43) Veröffentlichungstag der Anmeldung: 09.01.2013
(73) Patentinhaber: A+M Fertigungstechnik GmbH, 72644 Oberboihingen (DE)
(72) Erfinder: PALESCH, Edwin, 73252 Lenningen (DE)
(74) Vertreter: Jackisch-Kohl, Anna-Katharina
(86) Internationale Anmeldenummer: PCT/EP2011/000677
(87) Internationale Veröffentlichungsnummer: WO 2011/107217

(56) Entgegenhaltungen:
- EP-A1- 0 003 397
- EP-A1- 0 465 752
- EP-A2- 0 059 055
- WO-A1-2010/112159
- WO-A2-00/43695
- DE-A1- 4 027 724
- DE-A1- 10 123 105

## Beschreibung

Die Erfindung betrifft ein Getriebe nach dem Oberbegriff der Ansprüche 1 und 2. Getriebe dienen dazu, die Drehzahl eines Eintriebselementes in eine hiervon abweichende Drehzahl eines Austriebselementes zu wandeln. Getriebe können ein festes oder auch wählbares Übersetzungsverhältnis haben. Bei Getrieben mit einstellbaren Übersetzungsverhältnissen werden gestufte, schaltbare und variabel veränderbare Übersetzungsverhältnisse vorgesehen. Gestufte Übersetzungsverhältnisse werden mit manuell oder automatisch schaltbaren Stufengetrieben realisiert. Solche Getriebe sind beispielsweise Handschaltgetriebe, automatisierte Schaltgetriebe, Automatikgetriebe und Doppelkupplungsgetriebe. Gemeinsam ist diesen unterschiedlichen Getrieben, dass die Funktionselemente eine vorgegebene feste Abstufung des Übersetzungsverhältnisses aufweisen.

Getriebe mit variablem, frei einstellbarem Übersetzungsverhältnis sind beispielsweise Reibradgetriebe, Reibkegelgetriebe, Toroidgetriebe und Umschlingungsgetriebe. Je nach Getriebeausführung sind hierbei Übersetzungen vom Stillstand des Austriebselementes bis zu einem maximalen Übersetzungsverhältnis darstellbar. Bis auf das Toroidgetriebe, das mit einem sogenannten Null-Durchgang ausgeführt werden kann, benötigen die anderen mechanischen Getriebe eine Anfahrkupplung, um die Differenz der Drehzahlen aus dem Stillstand auf die Minimaldrehzahl anzupassen.

Weitere bekannte Getriebe sind Verzweigungs- und Überlagerungsgetriebe. Solche Getriebe haben mechanische und hydraulische oder mechanische oder elektromotorische Lastgrade. Bei diesen Getrieben ist meist keine Anfahrkupplung erforderlich, da mit dem elektrischen oder dem hydraulischen Lastpfad ein variables Übersetzungsverhältnis aus dem Nullpunkt heraus realisiert werden kann.

Alle beschriebenen Getriebe wandeln das Eingangsdrehmoment entsprechend dem Übersetzungsverhältnis in ein Austriebsdrehmoment um. Der Wirkungsgrad der Getriebe ist von deren Bauart abhängig. Bei einem manuell schaltbaren Getriebe sind Reib-, Wälz- und sogenannte Panschverluste leistungsmindernd. Bei automatisierten Getrieben, wie das automatisierte Schaltgetriebe, kommen zu den mechanischen Verlusten noch die Verluste durch die Aktorikelemente, wie Hydraulikpumpen, hinzu. Bei Getrieben mit Leistungsverzweigung treten in den Leistungszweigen Leistungsverluste auf.

Bei dem bekannten Getriebe (EP-A-3 397) koppelt das Koppelelement ein Ausgangselement mit einer Hydraulikstufe. Für sie ist eine Hydrauliksteuerung notwendig. Das Getriebe hat außerdem eine Koppelschwinge, die dann als Umlenkgetriebe wirkt, wenn eine Bremse betätigt wird. Die Steuerung des Getriebes muss darum das Zusammenspiel von Hydraulikantrieb und Bremse steuern.

Der Erfindung liegt die Aufgabe zugrunde, das gattungsgemäße Getriebe so auszubilden, dass es als mechanisches Getriebe einen einfachen Aufbau hat und ein in sich geschlossenes System derart bildet, dass keine Drehmomentabstützung von außen notwendig ist.

Diese Aufgabe wird beim gattungsgemäßen Getriebe erfindungsgemäß mit den kennzeichnenden Merkmalen des Anspruches 1 bzw. 2 gelöst.

Beim erfindungsgemäßen Getriebe ist eines der Getriebelemente zwischen dem Eintriebs- und dem Austriebselement das Regelelement, mit dem die Drehzahl des Eintriebselementes zur Weiterleitung an das Austriebselement verändert werden kann. Nimmt die Drehzahl des Regelelementes ab, wird die Drehzahl des Austriebselementes entsprechend erhöht. Das Drehmoment, das am Eintriebselement ansteht, wird über das Regelelement an das Austriebselement weitergegeben, so dass an ihm das Eintriebsdrehmoment ansteht. Das Eintriebselement ist beim Getriebe nach Anspruch 1 von einem Sonnenrad umgeben, das mit dem Koppelelement und mit dem Regelelement über Planetenräder in Eingriff ist. Die mit dem Regelelement in Eingriff befindlichen Planetenräder sitzen auf gehäusefesten Planetenradträgern. Das Koppelelement koppelt das Sonnenrad mit Planetenrädern der Koppelschwinge, die auf gehäusefesten Planetenträgern gelagert sind.

Beim Getriebe nach Anspruch 2 ist das Eintriebselement vom Sonnenrad umgeben, das durch das Koppelelement mit der im Gehäuse drehbar gelagerten Welle gekoppelt ist. Sie verbindet das Koppelelement mit Planetenrädern, die drehbar auf den gehäusefesten Stegen gelagert und in der Stützstufe mit einem Sonnenrad in Eingriff sind, das über Planetenräder mit dem Austriebselement antriebsverbunden ist.

Vorteilhaft ist das Regelelement über ein Koppelelement mit dem Austriebselement antriebsverbunden. Das Koppelelement seinerseits ist vorteilhaft über ein Stützelement mit dem Austriebselement antriebsverbunden. Über das Koppelelement und das Stützelement kann so viel Drehmoment auf das Eintriebselement und das Stützelement hinzugefügt werden, dass am Austriebselement ein gefordertes Austriebsdrehmoment ansteht. Diese Drehmomentübersetzung folgt somit der Getriebegesamtübersetzung.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung den grundsätzlichen Aufbau eines erfindungsgemäßen Getriebes,

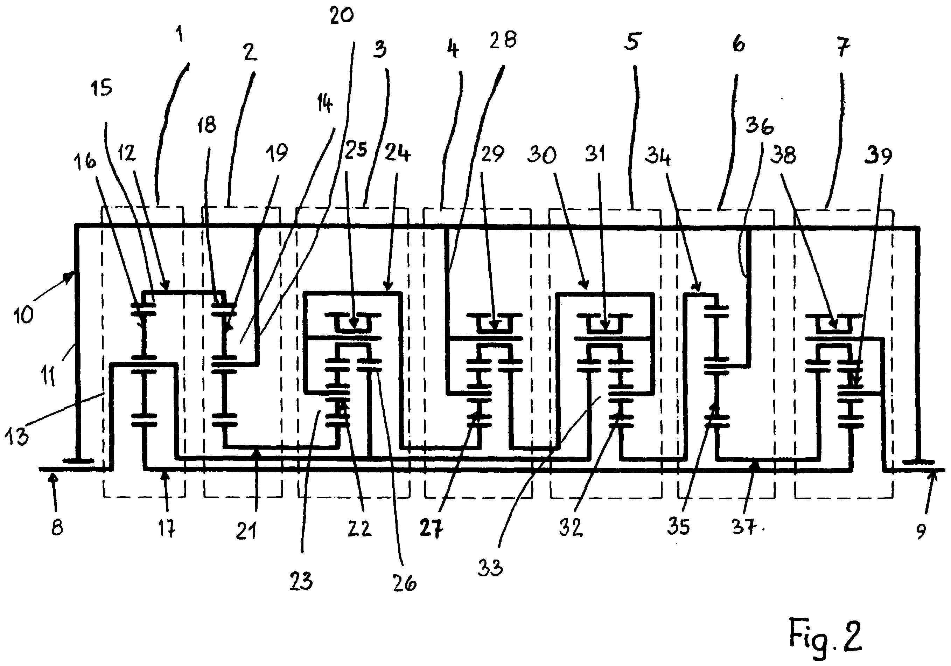

- Fig. 2: das Getriebe gemäß Fig. 1,
- Fig. 3: die Angabe von Momentrichtungen des erfindungsgemäßen Getriebes,
- Fig. 4: in einer Darstellung entsprechend den Fig. 1 und 2 eine zweite Ausführungsform eines erfindungsgemäßen Getriebes,
- Fig. 5: die Angabe der Momentrichtungen des erfindungsgemäßen Getriebes gemäß Fig. 4,
- Fig. 6: eine Eintriebsstufe des erfindungsgemäßen Getriebes gemäß Fig. 1,
- Fig. 7: eine Umkehrstufe des erfindungsgemäßen Getriebes gemäß Fig. 1,
- Fig. 8: eine Koppelstufe des erfindungsgemäßen Getriebes gemäß Fig. 1,
- Fig. 9: eine Koppelschwinge des erfindungsgemäßen Getriebes gemäß Fig. 1,
- Fig. 10: eine Stützstufe des erfindungsgemäßen Getriebes gemäß Fig. 1,
- Fig. 11: eine Umlenkstufe des erfindungsgemäßen Getriebes gemäß Fig. 1,
- Fig. 12: eine Austriebsstufe des erfindungsgemäßen Getriebes gemäß Fig. 1,
- Fig. 13: eine Eintriebsstufe des erfindungsgemäßen Getriebes gemäß Fig. 4,
- Fig. 14: eine Umkehrstufe des erfindungsgemäßen Getriebes gemäß Fig. 4,
- Fig. 15: eine Koppelstufe des erfindungsgemäßen Getriebes gemäß Fig. 4,
- Fig. 16: eine Stützstufe des erfindungsgemäßen Getriebe gemäß Fig. 4,

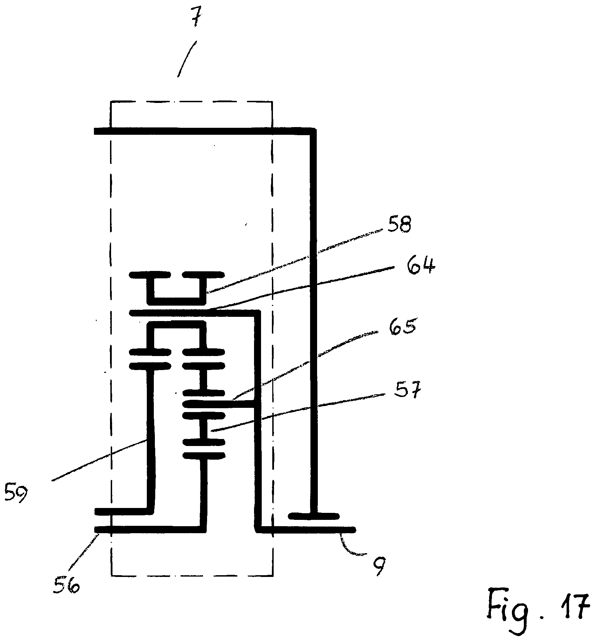

- Fig. 17: eine Austriebsstufe des erfindungsgemäßen Getriebes gemäß Fig. 4,
- Fig. 18: die Koppelung des erfindungsgemäßen Getriebes gemäß den Fig. 1 oder 4 mit einem Drehrichtungsgetriebe,
- Fig. 19: das Drehrichtungsgetriebe gemäß Fig. 18,

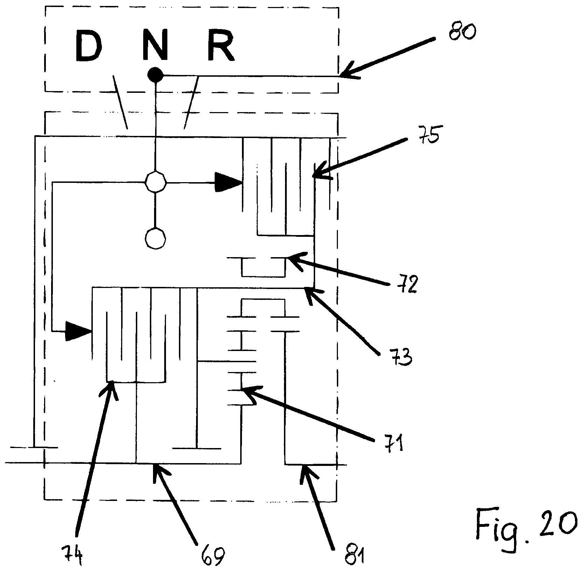

- Fig. 20: in vergrößerter Darstellung einen Teil des Drehrichtungsgetriebes gemäß Fig. 19,
- Fig. 21: eine Ölpumpe des Drehrichtungsgetriebes gemäß Fig. 19,
- Fig. 22: einen Leerlaufmotor des Getriebes gemäß Fig. 18,
- Fig. 23: ein Motorsteuerventil für den Leerlaufmotor gemäß Fig. 22,
- Fig. 24: einen Teil der Getriebeanordnung gemäß Fig. 18,
- Fig. 25: eine weitere Ausführungsform einer Getriebeanordnung mit dem erfindungsgemäßen Getriebe gemäß Fig. 1 oder 4 in Verbindung mit einem Drehrichtungsgetriebe sowie einer zwischen dem Getriebe und dem Drehrichtungsgetriebe zwischengeschalteten Trennkupplung,
- Fig. 26: einen Teil der Getriebeanordnung gemäß Fig. 25,
- Fig. 27: in vergrößerter Darstellung einen Teil der Getriebeanordnung gemäß Fig. 25.

Das Getriebe wird im Folgenden für den Einsatz an einem Motor eines Kraftfahrzeuges beispielhaft beschrieben. Auf diesen Einsatz ist das Getriebe allerdings nicht beschränkt. Es kann beispielsweise auch für Antriebsstränge von Windkraftanlagen, Generatoren, mobilen Arbeitsmaschinen und dergleichen eingesetzt werden.

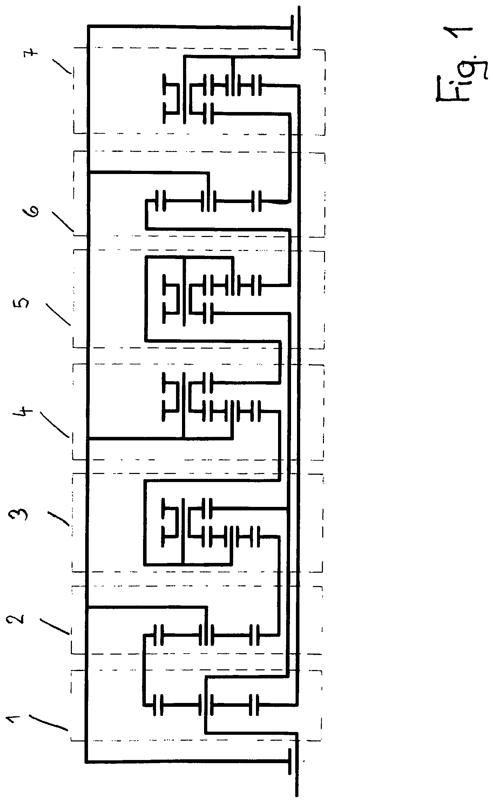

Das Getriebe gemäß Fig. 1 hat sieben Funktionsgruppen, die jeweils durch gestrichelte Kästchen angegeben sind. Das Getriebe nach Fig. 1 hat eine Eintriebsstufe 1, eine anschließende Umkehrstufe 2, eine nachfolgende Koppelstufe 3, eine Koppelschwinge 4, eine Stützstufe 5, eine Umlenkstufe 6 und eine Austriebsstufe 7. Diese verschiedenen Funktionsgruppen 1 bis 7 sind im Getriebestrang hintereinander angeordnet. Über die Eintriebsstufe 1 wird das Eintriebsmoment in das Getriebe 1 eingebracht und das jeweilige Austriebsmoment an der Austriebsstufe 7 abgegeben.

Das Getriebe ist ein mehrstufiges Planetengetriebe, mit dem eine Eintriebswelle 8 mit einer Austriebswelle 9 antriebsverbunden werden kann. Das Getriebe hat ein Gehäuse 10 in dessen Wandungen die Eintriebs- und die Austriebswelle 8, 9 drehbar gelagert sind. Benachbart zur linken Gehäusewand 11, in der die Eintriebswelle 8 gelagert ist, befindet sich ein Hohlrad 12, das Teil eines ersten sowie eines zweiten Planetenradsatzes 13 und 14 ist. Das Hohlrad 12 hat eine erste Innenverzahnung 15, in die Planetenräder 16 eingreifen, die über den Umfang des Hohlrades 12 verteilt angeordnet sind. Die Planetenräder 16 sind drehbar an der Eintriebswelle 8 gelagert und greifen in eine Zwischenwelle 17 ein, die sich zentral durch das Getriebe erstreckt.

Das Hohlrad 12 hat eine zweite Innenverzahnung 18, in die Planetenräder 19 des Planetenradsatzes 14 eingreifen. Die Planetenräder 19 sind über den Umfang des Getriebes verteilt angeordnet und sitzen jeweils auf Planetenradträgern 20, die gehäusefest angeordnet sind.

Die Planetenräder 19 kämmen mit einem zentralen Sonnenrad 21, das die Eintriebswelle 8 umgibt.

Der Planetenradsatz 13 ist Bestandteil der Eintriebsstufe 1 und der Planetenradsatz 14 Bestandteil der Umkehrstufe 2.

In das Sonnenrad 21 greifen weitere Planetenräder 22 eines Planetenradsatzes 23 ein, der Teil der Koppelstufe 3 des Getriebes ist. Die Planetenräder 22 sind drehbar auf einem Koppelsteg 24 gelagert, der die Koppelstufe 3 mit der Koppelschwinge 4 koppelt. Die Planetenräder 22 greifen in äußere Planetenräder 25 ein, die ebenfalls am Koppelsteg 24 drehbar gelagert sind. Die Planetenräder 22, 25 sind über den Umfang gleichmäßig verteilt angeordnet. Die äußeren Planetenräder 25 sind nicht nur mit den inneren Planetenrädern 22, sondern auch mit einer Verzahnung 26 der Eintriebswelle 8 in Eingriff.

Die Planetenräder 22, 25 sind Bestandteil der Koppelstufe 3. Der Koppelsteg 24 ist mit Planetenrädern 27 in Eingriff, die Teil der Koppelschwinge 4 sind. Die Planetenräder 27, die über den Umfang der Zwischenwelle 17 verteilt angeordnet sind, sind auf einem gehäusefesten Planetenradträger 28 drehbar gelagert. Er trägt außerdem äußere Planetenräder 29, die in Eingriff mit den inneren Planetenrädern 27 der Koppelschwinge 4 sind. Diese inneren Planetenräder 27 sind außerdem in Eingriff mit dem Koppelsteg 24.

Die Planetenräder 29 sind innerhalb der Koppelschwinge 4 außerdem in Eingriff mit einem Stützsteg 30, der die Koppelschwinge 4 mit der Stützstufe 5 verbindet. Er umgibt die Eintriebswelle 8 und dient als Planetenradträger für äußere Planetenräder 31 und innere Planetenräder 32 eines Planetenradsatzes 33 der Stützstufe 5. Die äußeren Planetenräder 31 greifen in die inneren Planetenräder 32 ein, die ihrerseits in Eingriff sind mit einem Hohlrad 34, das die Eintriebswelle 8 umgibt. Über das Hohlrad 34 ist die Stützstufe 5 mit der Umlenkstufe 6 verbindbar.

Innerhalb der Umlenkstufe 6 greifen in eine Innenverzahnung des Hohlrades 34 Planetenräder 35 ein, die über den Umfang der Zwischenwelle 17 verteilt angeordnet und auf gehäusefesten Planetenradträgern 36 drehbar gelagert sind. Die Planetenräder 35 greifen in eine erste Außenverzahnung eines Sonnenrades 37 bei, mit dem die Umlenkstufe 6 mit der Austriebsstufe 7 antriebsverbunden werden kann.

Innerhalb der Austriebsstufe 7 ist das Sonnenrad 37 über eine zweite Außenverzahnung mit Planetenrädern 38 in Eingriff, die drehbar auf der Austriebswelle 9 gelagert sind. Die Planetenräder 38 umgeben in der Austriebsstufe 7 innere Planetenräder 39, die ebenfalls drehbar auf der Austriebswelle 9 gelagert und in Eingriff mit ihnen sind. Die über den Umfang der Austriebsstufe 7 verteilt angeordneten inneren Planetenräder 39 sind in Eingriff mit der Zwischenwelle 17, welche sie umgeben.

Im Folgenden wird das Getriebe erläutert, wenn die Austriebswelle 9 stillsteht und die Eintriebswelle 8 eine Rechtsdrehung ausführt. Die Eintriebswelle 8 dreht dann rechts, was zur Folge hat, dass auch die Planetenräder 16 und das Hohlrad 12 rechts drehen. Das Hohlrad 12 bildet ein Regelelement des Getriebes. Auch die Planetenräder 19 führen eine Rechtsdrehung aus. Dies hat zur Folge, dass das Sonnenrad 21 links dreht. Dementsprechend werden die mit ihm in Eingriff befindlichen Planetenräder 22 rechts gedreht. Die mit ihnen in Eingriff befindlichen Planetenräder 25 drehen dementsprechend links. Der Koppelsteg 24, der ein Koppelelement des Getriebes bildet, dreht dementsprechend links. Dies hat zur Folge, dass die mit dem Koppelsteg 24 kämmenden inneren Planetenräder 27 rechts und die äußeren Planetenräder 29 links drehen. Der mit den inneren Planetenrädern 27 kämmende Stützsteg 30 dreht entsprechend rechts. Die auf ihm gelagerten inneren Planetenräder 32 drehen somit ebenfalls rechts, während die mit ihnen kämmenden äußeren Planetenräder 31 links drehen. Das Hohlrad 34 steht fest, so dass auch die Planetenräder 35, das Sonnenrad 37 sowie die Planetenräder 38 und 39 still stehen. Dementsprechend dreht auch die Austriebswelle 9 nicht. Die Zwischenwelle 17, die in Eingriff ist mit den Planetenrädern 16 der Eintriebsstufe 1 und den inneren Planetenrädern 39 der Austriebsstufe 7, steht ebenfalls still.

Im Folgenden werden die Drehrichtungen der einzelnen Getriebeelemente erläutert, wenn die Eintriebswelle 8 und die Austriebswelle 9 jeweils rechts drehen. Die Planetenräder 16 drehen weiterhin rechts, während das Hohlrad 12 mit verminderter Geschwindigkeit rechts gedreht wird. Dies hat zur Folge, dass die mit dem Hohlrad 12 kämmenden Planetenräder 19 ebenfalls vermindert rechts drehen. Das mit ihnen in Eingriff befindliche Sonnenrad 21 dreht dementsprechend mit verminderter Geschwindigkeit links. Die inneren Planetenräder 22 drehen mit verminderter Geschwindigkeit rechts und die äußeren Planetenräder 25 mit verminderter Geschwindigkeit links. Im Unterschied zu dem zuvor beschriebenen Zustand, bei dem die Austriebswelle 9 steht, steht nunmehr der Koppelsteg 24. Dies hat zur Folge, dass die mit dem Koppelsteg 24 kämmenden Planetenräder 27 und dementsprechend die äußeren, mit ihnen in Eingriff befindlichen Planetenräder 30 ebenfalls stillstehen. Auch der mit den äußeren Planetenrädern 29 in Eingriff befindliche Stützsteg 30 steht dementsprechend still.

Da die Eintriebswelle 8 rechts dreht, werden die in Eingriff mit ihr befindlichen Planetenräder 31 der Stützstufe 5 links gedreht. Die mit ihnen in Eingriff befindlichen Planetenräder 32 werden dementsprechend rechts gedreht. Das mit den Planetenrädern 32 in Eingriff befindliche Hohlrad 34 wird linksdrehend angetrieben. Die mit ihm in Eingriff befindlichen Planetenräder 35 drehen entsprechend links. Das Sonnenrad 37 wird dementsprechend rechts drehend angetrieben. Die Zwischenwelle 17 ist rechtsdrehend, so dass auch die mit ihr in Eingriff befindlichen Planetenräder 39 und die mit diesen in Eingriff stehenden Planetenräder 38 relativ zum Sonnenrad 37 und zur Zwischenwelle 17 stehen. Die Ansteuerung der verschiedenen Getriebeelemente für die beschriebenen Betriebszustände wird weiter unten beispielhaft näher erläutert.

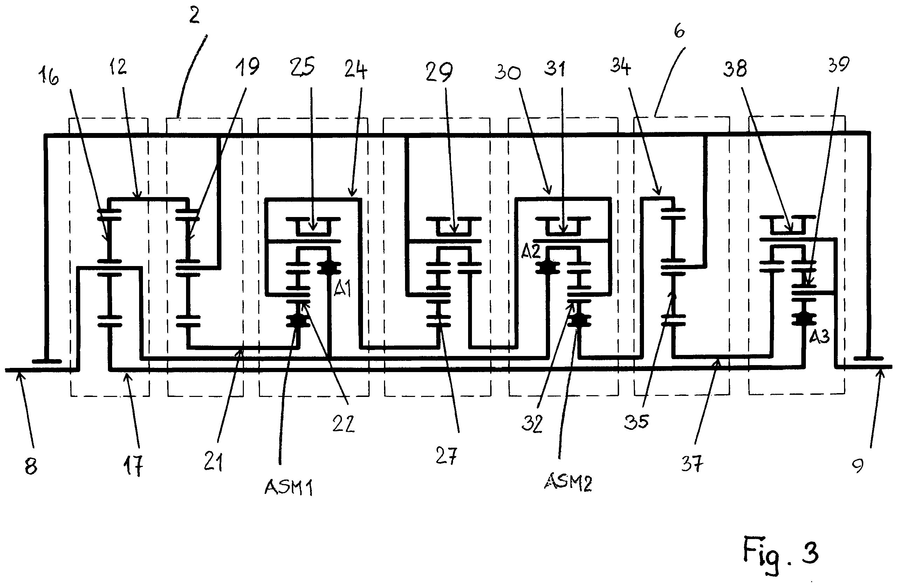

Anhand von Fig. 3 werden noch die Momentenrichtungen erläutert, die beim Betrieb des Getriebes auftreten. Das Mindestübersetzungsverhältnis iₘᵢₙ zwischen Eintriebswelle 8 und Austriebswelle 9 wird beispielhaft als 1:2 und das maximale Übersetzungsverhältnis iₘₐₓ von Eintriebswelle 8 zu Austriebswelle 9 mit ∞ angenommen. Es wird davon ausgegangen, dass die Eintriebswelle 8 rechts dreht. Dann tritt an ihr das rechts wirkende Antriebsmoment AM auf. An den Planetenrädern 16, am Hohlrad 12 sowie an den Planetenrädern 19 treten jeweils rechtswirkende Koppelmomente KM auf. Auch am Sonnenrad 21 liegt das linkswirkende Koppelmoment KM an. Auch an den Planetenrädern 25 liegt ein linkswirkendes Koppelmoment KM an, während an den inneren Planetenrädern 22 ein rechtswirkendes Koppelmoment KM wirkt. Dementsprechend tritt an den Planetenrädern 27 ein rechtswirkendes Stützmoment SM und an den äußeren Planetenrädern 29 ein linkswirkendes Stützmoment SM auf.

Am Stützsteg 30 und an den an ihm gelagerten äußeren Planetenrädern 31 tritt jeweils ein rechtswirkendes Stützmoment SM auf. Dementsprechend ist an den inneren Planetenrädern 32 ein linkswirkendes Stützmoment SM vorhanden.

Das Hohlrad 34 sowie die Planetenräder 35 und 38 haben jeweils ein rechtswirkendes Stützmoment SM. Dementsprechend wirkt am Sonnenrad 37 sowie an den Planetenrädern 39 ein linkes Stützmoment SM. An der Austriebswelle 9 tritt das linke Haltemoment HM auf.

A1 + A2 + A3 ergeben die Momentadditionspunkte. Der Punkt A1 wird durch den Eingriff der äußeren Planetenräder 25 in die Eintriebswelle 8, der Punkt A2 durch den Eingriff der Planetenräder 31 in die Eintriebswelle 8 und der Punkt A3 durch den Eingriffsbereich zwischen der Zwischenwelle 17, an der ein linkswirkendes aktives Moment auftritt, und den Planetenrädern 39 gebildet. Durch den Eingriff des Sonnenrades 21 mit den inneren Planetenrädern 22 wird das Stützmoment auf den Koppelsteg 24 ausgelöst. Dieser Eingriffsbereich ist mit ASM1 bezeichnet. Der Eingriffsbereich A1 zwischen der Eintriebswelle 8 und den Planetenrädern 25 trägt ebenfalls zur Auslösung des Stützmomentes SM auf den Koppelsteg 24 bei.

Am Eingriffsbereich zwischen dem Hohlrad 34 und den inneren Planetenrädern 32 erfolgt die Auslösung des Stützmomentes SM auf das Hohlrad 34. Der Eingriffsbereich A2 zwischen der Eintriebswelle 8 und den äußeren Planetenrädern 31 trägt ebenfalls zur Auslösung des Stützmomentes SM auf das Hohlrad 34 bei.

In der Umkehrstufe 2 beträgt das Übersetzungsverhältnis von Hohlrad 12 : Sonnenrad 21 = 1:1,5, während dieses Übersetzungsverhältnis in der Umlenkstufe 6 1:2 beträgt.

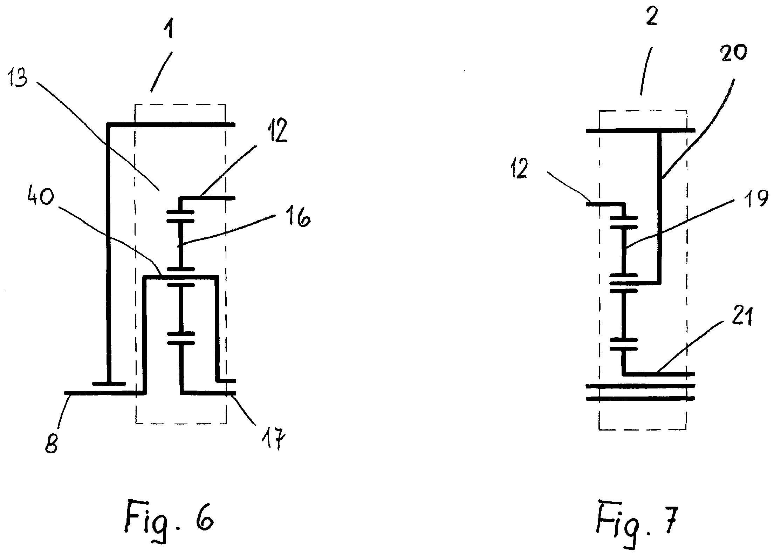

Fig. 6 zeigt die Eintriebsstufe 1 des Getriebes gemäß Fig. 1. Die Eintriebsstufe 1 ist als Planetensatz ausgebildet und hat das Hohlrad 12 als Regelelement, das mit den Planetenrädern 16 in Eingriff ist. Sie sitzen drehbar im Steg 40, der Teil der Eintriebswelle 8 ist. Mit den Planetenrädern 16 ist die Zwischenwelle 17 in Eingriff, die das Sonnenrad des Planetensatzes 13 bildet. Steht das Sonnenrad 17 still und dreht der Steg 40 als Teil der Eintriebswelle 8 rechts, dann kämmen die Planetenräder 16 rechtsdrehend am stehenden Sonnenrad 17 ab und nehmen dadurch das mit ihnen kämmende Hohlrad 12 rechtsdrehend mit.

Liegt am Sonnenrad 17 ein linksdrehend wirkendes Haltemoment HM an und wird am Steg 40 ein rechtsdrehendes Aktionsmoment AM eingeleitet, liegt am Hohlrad 12 entsprechend dem Planetensatzübersetzungsverhältnis ein rechtsdrehendes Drehmoment an.

Die Umkehrstufe 2 ist ähnlich einem Planetensatz ausgebildet und hat die gehäusefesten Planetenradträger 20 als Stege. Auf ihnen sitzen die Planetenräder 19, die mit dem Sonnenrad 21 kämmen. Außerdem sind die Planetenräder 19 in Eingriff mit dem sie umgebenden Hohlrad 12. Dreht das Hohlrad 12 rechts, dann treibt es die mit ihnen kämmenden Planetenräder 19 rechtsdrehend an. Das Sonnenrad 21, das mit den Planetenrädern 19 in Eingriff ist, wird dann linksdrehend angetrieben.

Liegt am Hohlrad 12 ein rechtsdrehendes Moment an, dann liegen an den Planetenrädern 19 ebenfalls rechtsdrehende Momente und am Sonnenrad 21 ein linksdrehendes Moment an. Dieses entspricht dem Planetensatzübersetzungsverhältnis zwischen dem Hohlrad 12 und dem stehenden Sonnenrad 21.

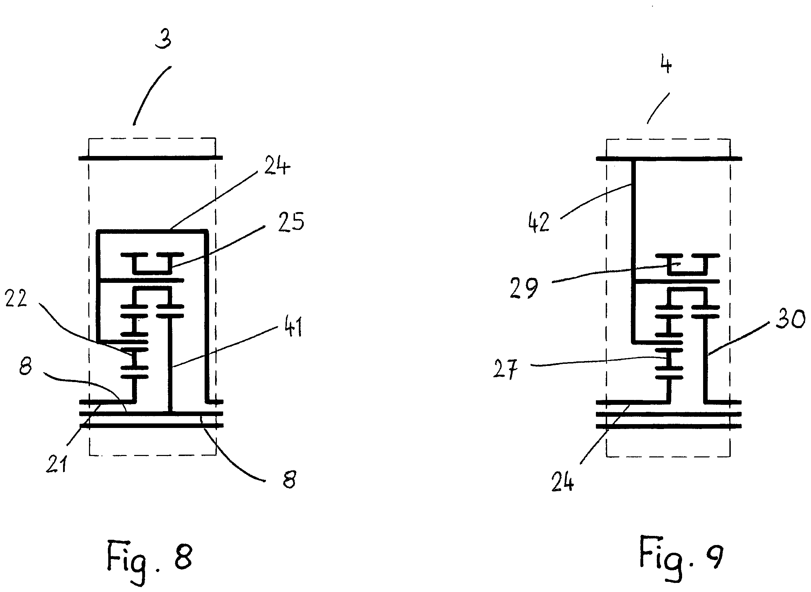

Die Koppelstufe 3 (Fig. 8) ist als Umlaufgetriebe ausgebildet. Es hat den Koppelsteg 24, die äußeren Planetenräder 25, die inneren Planetenräder 22, die Eintriebswelle 8 sowie das Sonnenrad 21. Dreht das Sonnenrad 21 links, treibt es die Planetenräder 22 rechtsdrehend an, wodurch die mit ihnen kämmenden äußeren Planetenräder 25 linksdrehend angetrieben werden. Sie kämmen auf dem rechtsdrehenden Sonnenrad 41 als Teil der Eintriebswelle 8.

Bei einem Übersetzungsverhältnis von Sonnenrad 41 zu Sonnenrad 21 von 1:1 und einem sich schneller linksdrehenden Sonnenrad 21 wird der Koppelsteg 24 in eine linksdrehende Bewegung versetzt.

Das linksdrehende Drehmoment des Sonnenrades 21 gibt an die Planetenräder 22 ein rechtsdrehendes und diese an die Planetenräder 25 ein linksdrehendes Drehmoment weiter. Dieses linksdrehende Drehmoment bewirkt am Sonnenrad 41 ein rechtsdrehendes Drehmoment. Als Reaktions- oder Stützmoment tritt am Koppelsteg 24 ein linksdrehendes Stützmoment SM auf. Wird diesem Stützmoment SM entsprochen, addiert sich das an den Planetenrädern 25 vorhandene Drehmoment zum Eintriebsdrehmoment.

Die Koppelschwinge 4 (Fig. 9) ist wie ein Umlaufgetriebe mit dem feststehenden, gehäusefesten Steg 42 aufgebaut und arbeitet als ein Drehrichtungs-Umkehrgetriebe. Der Koppelsteg 24 dient als erstes Sonnenrad, das mit den Planetenrädern 27 kämmt, die ihrerseits in Eingriff sind mit den Planetenrädern 29. Der Stützsteg 30 wirkt als zweites Sonnenrad.

Der linksdrehende Koppelsteg 24 versetzt die Planetenräder 27 in eine rechtsdrehende Bewegung. Dadurch werden die Planetenräder 29 in eine linksdrehende Bewegung versetzt. Der mit den Planetenrädern 29 in Eingriff befindliche Stützsteg 30 wird dementsprechend rechtsdrehend angetrieben. Bei einem Übersetzungsverhältnis von Koppelsteg 24 zu Stützsteg 30 von 1:1 erzeugt der linksdrehend eintreibende Koppelsteg 24 die gleiche Drehzahl rechtsdrehend am Stützsteg 30. Das linksdrehend wirkende Stützmoment SM des Koppelsteges 24 wird in ein rechtsdrehend wirkendes Stützmoment SM am Stützsteg 30 gewandelt.

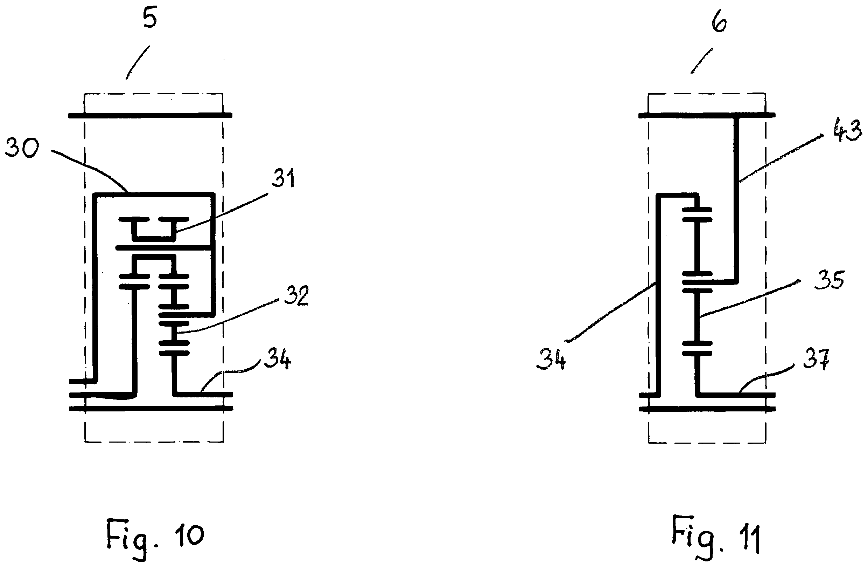

Die Stützstufe 5 (Fig. 10) ist als Umlaufgetriebe ausgebildet. Die Stützstufe 5 hat den Stützsteg 30, die Planetenräder 31, 32 sowie das Hohlrad 34. Der rechtsdrehende, gegenüber dem Eintrieb langsamer drehende Stützsteg 30 versetzt die Planetenräder 31 in eine linksdrehende Bewegung, durch welche die Planetenräder 32 in eine rechtsdrehende Bewegung versetzt werden. Das mit den Planetenrädern 32 kämmende Hohlrad 34 wird rechtsdrehend angetrieben.

Das am Stützsteg 30 anliegende, rechtsdrehend wirkende Stützmoment SM wird an den Planetenrädern 31 in ein linksdrehend wirkendes und an den Planetenrädern 32 in ein rechtsdrehend wirkendes Stützmoment SM umgewandelt.

Die Umlenkstufe 6 gemäß Fig. 11 ist wie ein Planetensatz mit einem feststehenden Steg 43 ausgebildet. Die Umlenkstufe 6 hat das Hohlrad 34, die Planetenräder 35 sowie das als Umlenksonnenrad wirkende Sonnenrad 37. Das rechtsdrehende Hohlrad 34 treibt die Planetenräder 35 rechtsdrehend an, wodurch das Sonnenrad 37 linksdrehend angetrieben wird.

Das rechtsdrehend wirksame Stützmoment SM des Hohlrades 34 wird als linksdrehend wirksames Stützmoment SM am Sonnenrad 37 umgewandelt.

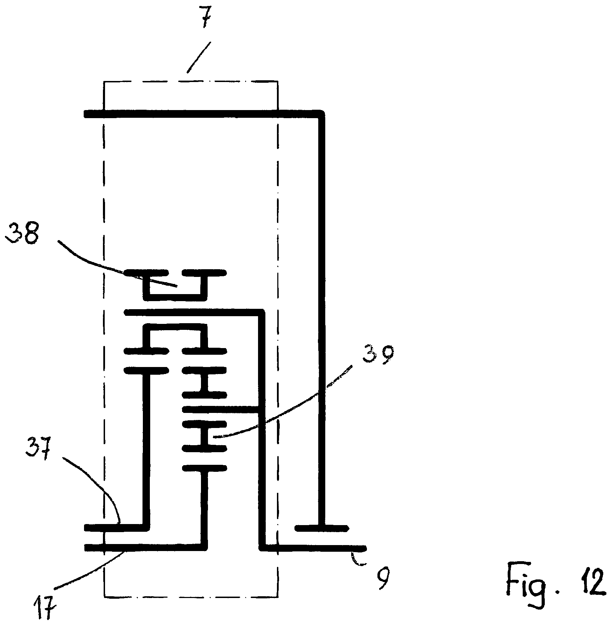

Die Austriebsstufe 7 gemäß Fig. 12 ist als Umlaufgetriebe ausgebildet. Es hat das als Umlenksonne wirkende Sonnenrad 37, die Planetenräder 38, 39 die Zwischenwelle 17 und die Austriebswelle 9.

Das Sonnenrad 37 und die Zwischenwelle 17 drehen rechts mit der gleichen Drehzahl. Die Planetenräder 38, 39 sind in Eingriff mit dem Sonnenrad 37 sowie den Planetenrädern 39. Somit wird die Austriebswelle 9 auf die gleiche Drehzahl gebracht wie die Zwischenwelle 17.

Das linksdrehend wirksame Stützmoment SM des Sonnenrades 37 wirkt auf die Planetenräder 38, die dementsprechend ein rechtsdrehend wirkendes Stützmoment SM erhalten. Die Planetenräder 39 erhalten dementsprechend ein linksdrehend wirksames Stützmoment SM. Die Austriebswelle 9 erhält somit ein rechtsdrehend wirksames Stützmoment.

Die beiden rechtsdrehenden Stützmomente SM in der Austriebsstufe 7, das rechtsdrehend wirksame Stützmoment SM, das in der Stützstufe 5 erzeugt wird, und das rechtsdrehend wirksame aktive Drehmoment AM, das durch eine Addition aus aktivem Moment und Koppelelement gebildet wird, ergeben zusammen das Austriebsmoment, das an der Austriebswelle 9 ansteht.

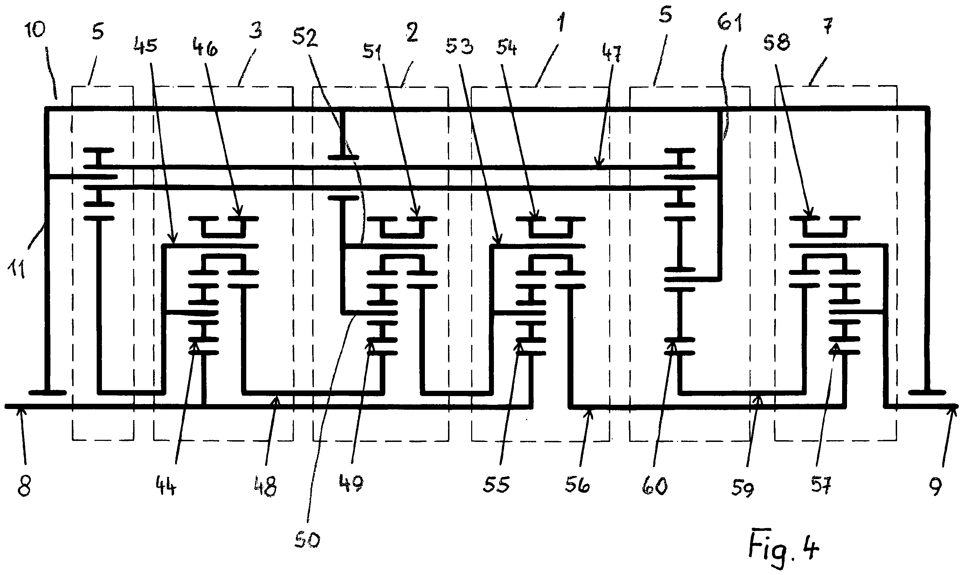

Fig. 4 zeigt eine zweite Ausführungsform des Getriebes. Dieses Getriebe hat die Eintriebsstufe 1, die Umkehrstufe 2, die Koppelstufe 3, die Stützstufe 5 und die Austriebsstufe 7. Die Eintriebswelle 8 ist in der Gehäusewand 11 des Gehäuses 10 drehbar gelagert. Mit der Eintriebswelle 8 kämmen Planetenräder 44, die drehbar an einem Koppelelement 45 gelagert sind. Die Planetenräder 44 kämmen mit Planetenrädern 46, die ebenfalls drehbar am Koppelelement 45 gelagert sind und die Planetenräder 44 umgeben.

Das Koppelement 45 ist in Eingriff mit einer Welle 47, die drehbar im Gehäuse 10 gelagert ist und parallel zur Eintriebswelle 8 liegt.

Die Planetenräder 46 kämmen mit einem Sonnenrad 48, das die Eintriebswelle 8 umgibt. Mit dem Sonnenrad 48 sind innere Planetenräder 49 in der Koppelstufe 3 in Eingriff, die auf gehäusefesten Stegen 50 drehbar gelagert sind. Die Planetenräder 49 sind in Eingriff mit äußeren Planetenrädern 51, die auf weiteren gehäusefesten Stegen 52 drehbar gelagert sind. Die äußeren Planetenräder 51 kämmen mit einem als Schwinge ausgebildeten Koppelelement 53, auf dem äußere Planetenräder 54 drehbar gelagert sind. Sie kämmen mit inneren Planetenrädern 55, die drehbar am Koppelelement 53 gelagert und in Eingriff mit der Eintriebswelle 8 sind.

Die äußeren Planetenräder 54 sind außerdem in Eingriff mit einer Zwischenwelle 56, die ihrerseits in Eingriff mit inneren Planetenrädern 57 in der Austriebsstufe ist. Die Planetenräder 57 kämmen mit äußeren Planetenrädern 58, die drehbar auf der Austriebswelle 9 gelagert sind. Außerdem kämmen die äußeren Planetenräder 58 mit einem Sonnenrad 59, das in der Stützstufe 5 über Planetenräder 60 mit der Welle 47 antriebsverbunden ist. Die Planetenräder 60 sind drehbar auf gehäusefesten Stegen 61 gelagert.

Die Austriebswelle 9 ist wie bei der vorigen Ausführungsform in der Gehäusewand drehbar gelagert.

Im Folgenden werden beispielhaft die Drehrichtungen der Getriebeelemente erläutert, wenn die Eintriebswelle 8 rechts angetrieben wird und die Austriebswelle 9 stillsteht. Die rechtsdrehende Eintriebswelle 8 treibt die Planetenräder 44 links an. Die äußeren Planetenräder 46 drehen dadurch rechts. Das Koppelelement 45 sowie die Welle 47 stehen still.

Das Sonnenrad 48 wird durch die Planetenräder 46 linksdrehend angetrieben. Dies hat zur Folge, dass die Planetenräder 49 rechtsdrehend angetrieben werden. Die mit ihnen in Eingriff befindlichen Planetenräder 51 drehen dementsprechend links. Das mit den Planetenrädern 51 in Eingriff befindliche Koppelelement 53 wird rechtsdrehend angetrieben.

Die mit der Eintriebswelle 8 kämmenden Planetenräder 55 werden linksdrehend angetrieben, wodurch die mit ihnen kämmenden Planetenräder 54 rechtsdrehend angetrieben werden.

Da die Welle 47 steht, stehen auch die Zwischenwelle 56, die Planetenräder 60, das Sonnenrad 59, die Planetenräder 57 und 58 sowie die Austriebswelle 9.

Das Koppelelement 45, die Welle 47, die Planetenräder 60, das Sonnenrad 59 und die Planetenräder 57, 58 bilden, da sie nicht drehen, somit ein Stützelement, an dem die Drehmomente abgestützt werden.

Im Folgenden werden die Drehrichtungen der Getriebeelemente beschrieben, wenn die Eintriebswelle rechtsdrehend angetrieben wird und die Austriebswelle 9 mit maximaler Drehzahl dreht. Durch die rechtsdrehende Eintriebswelle 8 werden die Planetenräder 44 linksdrehend angetrieben. Die Planetenräder 46 werden dementsprechend rechtsdrehend angetrieben. Das Koppelelement 45 wird rechtsdrehend mitgenommen. Die Welle 47 wird dementsprechend linksdrehend angetrieben, da sie in Eingriff mit dem rechtsdrehenden Koppelelement 45 ist. Die mit der Welle 47 in Eingriff befindlichen Planetenräder 60 werden dementsprechend rechtsdrehend angetrieben. Dies hat zur Folge, dass das Sonnenrad 59 linksdrehend angetrieben wird.

Das Sonnenrad 48 steht still. Dementsprechend stehen auch die Planetenräder 49, 51 still. Das mit den Planetenrädern 51 in Eingriff befindliche Koppelelement 53 steht somit ebenfalls still. Die Planetenräder 54 drehen rechts, so dass die mit ihnen in Eingriff befindlichen inneren Planetenräder 55 links drehen. Die rechts drehenden Planetenräder 54 drehen die Zwischenwelle 56 links. Die Planetenräder 57, 58 stehen relativ zur Zwischenwelle 56 und zum Sonnenrad 59 still, wodurch die Austriebswelle 9 linksdrehend angetrieben wird.

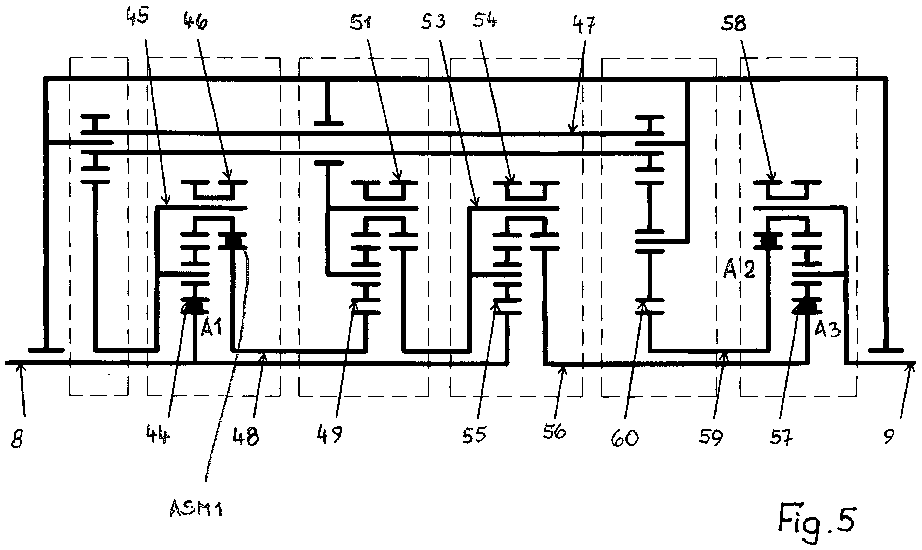

Anhand von Fig. 5 werden beispielhaft Momentenrichtungen beschrieben, wenn beispielhaft die Eintriebswelle 8 rechtsdrehend angetrieben wird und die Austriebswelle 9 ein rechtsdrehendes Haltemoment aufweist.

An der Eintriebswelle 8 tritt das aktive Moment AM auf, das rechtsdrehend wirkt. Am Koppelelement 45 tritt das linksdrehend wirksame Stützmoment SM und an den Planetenrädern 46 das rechtsdrehend wirksame Koppelmoment KM auf. Dementsprechend tritt an den inneren Planetenrädern 44 das linksdrehend wirksame Koppelmoment KM auf.

Das Sonnenrad 48 erzeugt das linksdrehende Koppelelement KM, während an den mit ihm kämmenden Planetenrädern 49 ein rechtsdrehendes Koppelmoment auftritt. Dementsprechend tritt an den mit ihnen kämmenden äußeren Planetenrädern 51 ein linksdrehendes Koppelmoment KM auf. Das Koppelelement 53 und die Planetenräder 54 haben jeweils ein rechtsdrehend wirksames Koppelmoment KM, während die Planetenräder 55 ein linksdrehendes Koppelmoment KM aufweisen.

Die Welle 47 erzeugt ein rechtsdrehend wirksames Stützmoment SM. Die Planetenräder 60, die mit der Welle 47 kämmen, erzeugen dementsprechend ein linksdrehend wirksames Stützmoment SM.

Die Zwischenwelle 56 erzeugt ein linksdrehend wirksames aktives Moment AM.

Am Sonnenrad 59 sowie an den Planetenrädern 57 wird jeweils ein rechtsdrehend wirksames Stützmoment SM erzeugt. Dementsprechend tritt an den mit den Planetenrädern 57 kämmenden äußeren Planetenrädern 58 ein linksdrehend wirksames Stützmoment SM auf. An der Austriebswelle 9 wird somit ein rechtsdrehend wirksames Haltemoment HM erzeugt.

Die Momentenbereiche A1, A2 und A3 bilden Momentadditionspunkte, die zum Gesamtdrehmoment beitragen. Der Momentbereich A1 wird am Eingriffsbereich zwischen der Eintriebswelle 8 und den Planetenrädern 44, der Momentenbereich A2 im Eingriffsbereich zwischen dem Sonnenrad 59 und den Planetenrädern 58 und der Momentenbereich A3 am Eingriffsbereich zwischen der Zwischenwelle 56 und den Planetenrädern 57 gebildet.

Die Auslösung des Stützmomentes SM auf das Koppelelement 45 erfolgt in den Bereichen A1 und ASM1. Der Bereich ASM1 wird durch den Eingriffsbereich zwischen dem Sonnenrad 48 und den Planetenrädern 46 gebildet.

An den Bereichen A2 und A3 erfolgt die Auslösung des Stützmomentes SM.

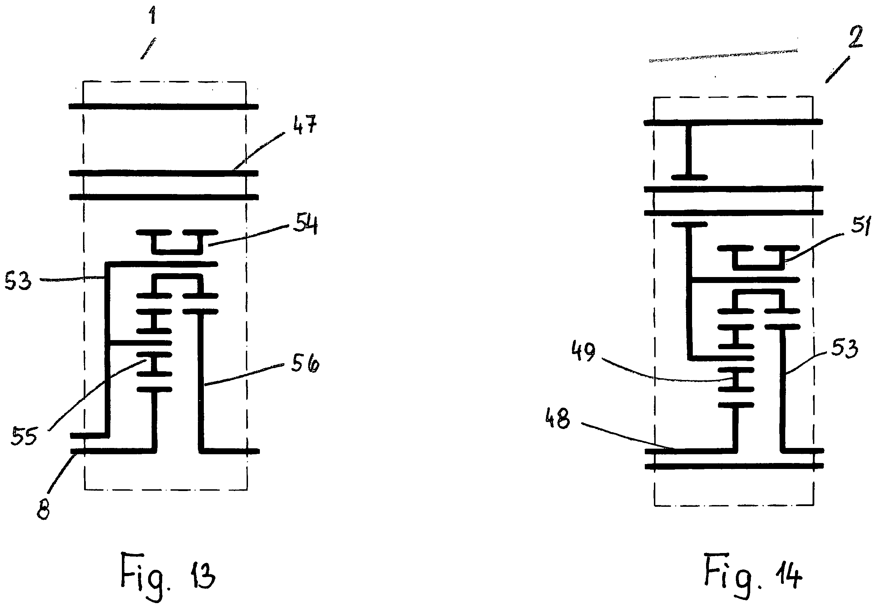

Die Eintriebsstufe 1 (Fig. 13) hat die äußeren Planetenräder 54, die inneren Planetenräder 55, die Zwischenwelle 56, das Koppelelement 53 und die Eintriebswelle 8. Sie wirkt in der Eintriebsstufe 1 als Sonnenrad. Wenn es rechtsdrehend angetrieben wird, treibt es die Planetenräder 55 linksdrehend an. Die äußeren Planetenräder 54 werden dadurch rechtsdrehend angetrieben. Die Planetenräder 54 kämmen mit der Zwischenwelle 56 und versetzen dementsprechend das Koppelelement 53 in eine rechtsdrehende Bewegung, wenn die Eingangswelle 8 schneller dreht als die Zwischenwelle 56.

Liegt an der Eintriebswelle 8 ein rechtsdrehend wirksames Drehmoment an, werden die Planetenräder 55 ein linksdrehend und die Planetenräder 54 ein rechtsdrehend wirksames Drehmoment, wird auf die Zwischenwelle 56 ein linksdrehendes Drehmoment erzeugt. Liegt an der Zwischenwelle 56 ein rechtsdrehend wirksames Haltemoment an, dann wälzen sich die Planetenräder 54 an der als Sonnenrad wirkenden Außenverzahnung der Zwischenwelle 56 ab, wodurch das Koppelelement 53 in eine rechtsdrehende Bewegung mit rechtsdrehend wirksamen Drehmoment versetzt wird.

Die Umkehrstufe 2 gemäß Fig. 14 ist als Getriebe zur Drehrichtungsumkehr und Übersetzungsänderung ausgelegt. Es entspricht einem Umlaufgetriebe mit einem gehäusefesten Steg. Die Umkehrstufe 2 hat das Koppelelement 53, das als Eintriebssonnenrad wirksam ist, die Planetenräder 49, 51 und das Sonnenrad 48.

Das rechtsdrehende Koppelelement 53 treibt die Planetenräder 51 linksdrehend an, wodurch die mit ihnen in Eingriff befindlichen Planetenräder 49 rechtsdrehend angetrieben werden. Das Sonnenrad 48 wird von den Planetenrädern 49 entsprechend linksdrehend angetrieben.

Das rechtsdrehend wirksame Koppelelement 53 wird durch die Umkehrstufe 2 zu einem linksdrehend wirksamen Koppelelement am Sonnenrad 48 gewandelt.

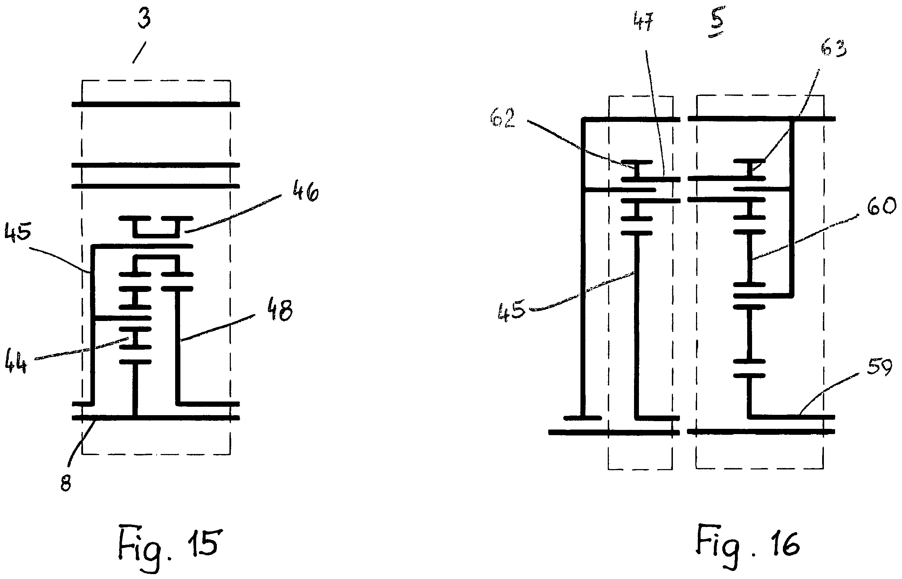

Die Koppelstufe 3 gemäß Fig. 15 ist als Umlaufgetriebe ausgebildet. Es hat das Sonnenrad 48, die Planetenräder 44, 46 sowie das Koppelelement 45.

Das linksdrehende Sonnenrad 48 treibt die Planetenräder 46 rechtsdrehend und diese die Planetenräder 44 linksdrehend an. Die Planetenräder 44 kämmen mit der Eintriebswelle 8. Bei gleicher Drehzahl von linksdrehendem Sonnenrad 48 und rechtsdrehender Eintriebswelle 8 steht das Koppelelement 45. Dreht das Sonnenrad 48 mit geringerer Drehzahl als die Eintriebswelle 8, wird das Koppelelement 45 in eine rechtsdrehende Bewegung versetzt.

Das am Sonnenrad 48 anliegende, linksdrehend wirksame Koppelmoment erzeugt an den Planetenrädern 46 ein rechtsdrehend und an den Planetenrädern 44 ein linksdrehend wirksames Koppelmoment. Dieses linksdrehend wirksame Koppelelement wird auf die Eintriebswelle 8 als rechtsdrehend wirksames Koppelelement aufaddiert.

Die Eingriffsbereiche zwischen dem Sonnenrad 48 und den Planetenrädern 46 sowie zwischen den Planetenrädern 44 und der Eintriebswelle 8 erzeugen am Koppelelement 45 ein linksdrehend wirksames Stützmoment. Ohne dieses Stützmoment wird das beschriebene Koppelelement nicht auf die Eintriebswelle 8 aufaddiert.

Die Stützstufe 5 gemäß Fig. 16 hat das Koppelelement 45, das in Eingriff mit der Welle 47 ist. An beiden Enden der Welle 47 befinden sich Verzahnungen/ Zahnräder 62, die mit dem Koppelelement 45 und mit den Planetenrädern 60 in Eingriff sind. Über die Planetenräder 60 wird das Sonnenrad 59 angetrieben.

Das rechtsdrehende Koppelelement 45 treibt die Welle 47 linksdrehend an. Die mit ihr in Eingriff befindlichen Planetenräder 60 werden entsprechend rechtsdrehend angetrieben. Dadurch wird das Sonnenrad 59 linksdrehend von den Planetenrädern 60 angetrieben.

Das am Sonnenrad 59 linksdrehend wirksame Stützmoment wird an der Welle 47 in ein rechtsdrehend wirksames, an den Planetenrädern 60 in ein linksdrehend und am Sonnenrad 59 in ein rechtsdrehend wirksames Stützmoment gewandelt.

Die Austriebsstufe 7 ist als Umlaufgetriebe ausgebildet und hat das Sonnenrad 59, die Planetenräder 57, 58, die Zwischenwelle 56 und die Austriebswelle 9.

Das linksdrehende Sonnenrad 56 und die linksdrehende Zwischenwelle 59 drehen mit gleicher Drehzahl. Steht eines dieser beiden Getriebeelemente, steht auch das jeweils andere Getriebeelement. Die Planetenräder 57, 58 drehen relativ zueinander sowie zum Sonnenrad 59 und zur Zwischenwelle 56. Dies hat zur Folge, dass die Austriebswelle 9 stets die gleiche Drehzahl hat wie das Sonnenrad 59 und die Zwischenwelle 56.

Das linksdrehende Sonnenrad 59 wirkt auf die Planetenräder 58 und die linksdrehende Zwischenwelle 56 auf die Planetenräder 57. Die Planetenräder 57, 58 sind miteinander in Eingriff und jeweils drehbar an den Stegen 64, 65 der Austriebswelle 9 gelagert. Die Planetenräder 57, 58 drehen zwar um ihre jeweiligen Achsen, sind aber relativ zueinander ortsfest angebracht, so dass sie die Austriebswelle 9 in der gleichen, linksdrehenden Richtung antreiben.

Das rechtsdrehend wirksame Stützmoment des Sonnenrades 59 wirkt auf die Planetenräder 58 und erzeugt an ihnen ein rechtsdrehend wirksames Stützmoment. Es wirkt auf die Planetenräder 57 und erzeugt dort ein rechtsdrehend wirksames Stützmoment. Durch die Planetenräder 57 wird an der Zwischenwelle 56 ein linksdrehend wirksames Stützmoment erzeugt.

An der Zwischenwelle 56 liegt das linksdrehend wirksame aktive Moment an, zu dem das von den Planetenrädern 57 erzeugte linksdrehend wirksame Stützmoment addiert wird. Die beiden summierten Momente liegen dann an der linksdrehenden Austriebswelle 9 als linksdrehend wirksames Moment an.

Die beiden Getriebe gemäß den Fig. 1 und 4 haben die gleichen Funktionselemente in Form der Eintriebswelle 8, des Regelelementes 12, 53, der Zwischenwelle 17, 56, des Koppelelementes 24, 45, des Stützelementes 30; 45, 47 und der Austriebswelle 9. Das Regelelement 12, 53 ist zwischen der Eintriebswelle 8 und der Zwischenwelle 17, 56 angeordnet und mit beiden Elementen in Eingriff. Mit dem Regelelement 12, 53 wird die Drehzahl der Eintriebswelle 8 zur Weiterleitung an die Zwischenwelle 17, 56 und die Austriebswelle 9 verändert. Bei gleichbleibender Drehzahl der Eintriebswelle 8 und stehender Austriebswelle 9 wird am Regelelement 12, 53 die höchste Drehzahl für dieses Regelelement nach dem jeweiligen Übersetzungsverhältnis erzeugt. Eine Verringerung der Drehzahl des Regelelementes 12, 43 hat eine Erhöhung der Drehzahl der Austriebswelle 9 zur Folge. Bei stehendem Regelelement 12, 53 hat die Austriebswelle 9 ihre höchste Drehzahl erreicht.

Das Regelelement 12, 53 ist durch das Koppelelement 24, 45 mit der Eintriebswelle 8 verbunden. Das Koppelelement 24, 45 selbst ist über das Stützelement 30; 45, 47 mit der Austriebswelle 9 verbunden, die ihrerseits mit der Zwischenwelle 17, 56 antriebsverbunden ist.

Als Drehzahl führende Getriebeelemente dienen das Stützelement 30; 45, 47 und das Koppelelement 24, 45. Ändert sich die Drehzahl der Austriebswelle 9, ändert sich auch die Drehzahl des Regelelementes 12, 53.

Liegt an der Eintriebswelle 8 ein Drehmoment an, wird es über das Regelelement 12, 53 an die Zwischenwelle 10, 56 weitergegeben. Das am Regelelement 12, 53 entstehende Drehmoment wird über das Koppelelement 24, 45 zum Drehmoment der Eintriebswelle 8 hinzugefügt. Um diese Momentenaddition aufrecht zu erhalten, wird das Koppelelement 24, 45 abgestützt. Hierzu dient das Stützelement 30; 45, 47, das sich in der Austriebsstufe 7 an der Zwischenwelle 17, 56 abstützt und mit ihm zusammen an der Austriebswelle 9 das Austriebsmoment erzeugt.

Das Getriebe ist ein Drehzahl- und Drehmomentwandler. Die dem Getriebe am Getriebeeingang zugeführte Eintriebsleistung wird, abzüglich der inneren Verluste, wie Reibleistung, als Austriebsleistung am Getriebeausgang zur Verfügung gestellt.

Beispielhaft wird eine Austriebsleistung von 1.000 W bei einer Austriebsdrehzahl von 1.000 U/min gefordert. Hieraus errechnet sich ein Austriebsdrehmoment MA = (P x 60)/(2 x π x n) = (1.000 W x 60) / (2 x π x 1.000 U/min) = 9,54 Nm.

Die Eingangsdrehzahl soll beispielhaft 2.000 U/min betragen. Daraus errechnet sich das Eingangsmoment ME = (P x 60) / (2 x π x n) = (1.000 W x 60) / (2 x π x 2.000 U/min) = 4,77 Nm. Dem Getriebe wird somit am Getriebeeingang ein Drehmoment von 4,77 Nm zugeführt. Das Drehmoment wird über die Verbindung der Eintriebswelle 8 über das Regelelement 12, 53 an die Zwischenwelle 17, 56 weitergegeben. Dadurch steht hier das Eintriebsdrehmoment an. Über das Koppelelement 24, 45 und das Stützelement 30; 45, 47 wird zum Drehmoment der Eintriebswelle 8 und des Stützelementes 30; 45, 47 so viel Drehmoment zugefügt, bis an der Austriebswelle 9 das geforderte Austriebsdrehmoment von 9,54 Nm ansteht. Die Momentübersetzung folgt also der Getriebegesamtübersetzung.

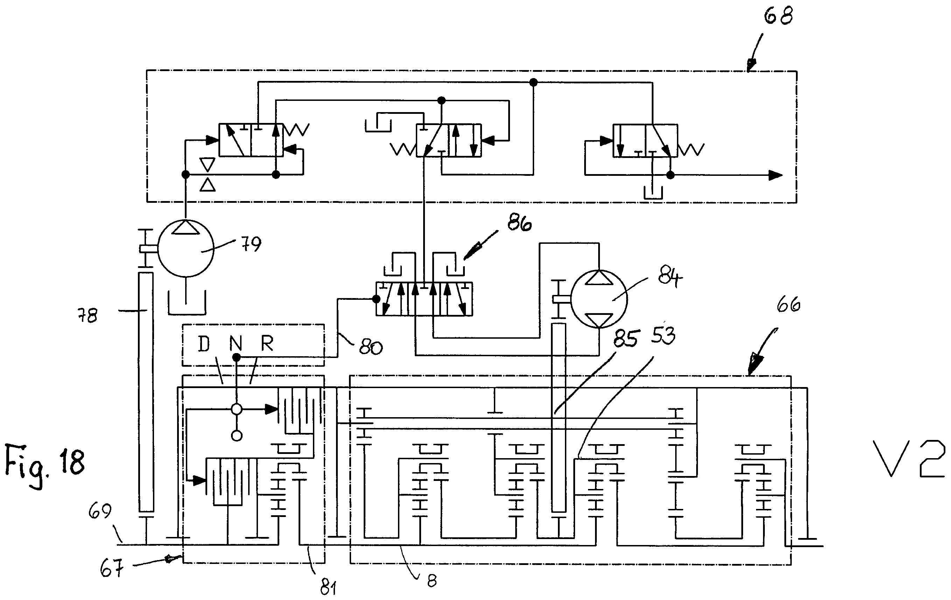

Fig. 18 zeigt ein Beispiel, wie das Getriebe innerhalb eines Kraftfahrzeuges eingesetzt werden kann. Im Ausführungsbeispiel hat das Getriebe 66 eine Ausbildung entsprechend Fig. 4. Das Getriebe kann auch eine Ausbildung entsprechend Fig. 1 haben. Das Getriebe 66 ist mit einem Drehrichtungsgetriebe 67 kombiniert. Das Gesamtgetriebe 66, 67 wird hydraulisch angesteuert, wofür beispielhaft eine hydraulische Steuerung 68 beispielhaft angegeben ist.

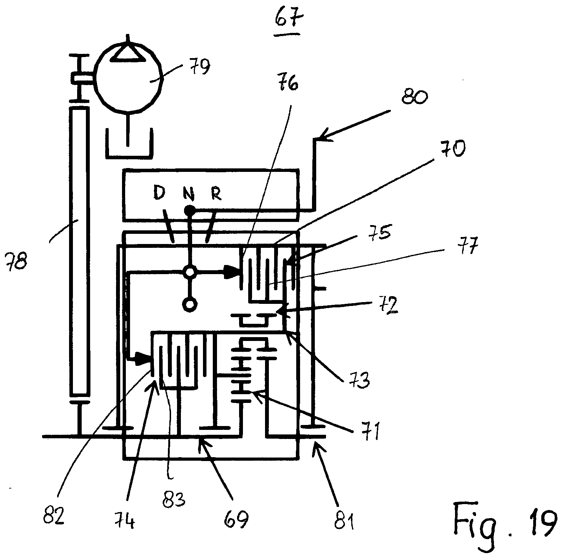

Das Drehrichtungsgetriebe 67 (Fig. 19) hat eine Eintriebswelle 69, die innerhalb eines Gehäuses 70 in Eingriff mit Planetenrädern 71 ist, die mit äußeren Planetenrädern 72 kämmen, die drehbar auf einem Planetenradträger 73 gelagert sind. Er ist Teil einer Kupplung 74, die form- und/oder reibschlüssig arbeiten kann.

Im Gehäuse 70 ist weiter eine Bremse 75 untergebracht, die beispielhaft eine Lamellenbremse sein kann. Sie hat gehäusefest angeordnete Bremslamellen 76, zwischen die kupplungsseitige Bremslamellen 77 eingreifen. Sie sind fest mit dem Planetenradträger 73 verbunden.

Die Eintriebswelle 69 ist über einen Antrieb 78, der beispielhaft ein Ketten- oder Riementrieb sein kann, mit einer Ölpumpe 79 antriebsverbunden.

Mit Hilfe eines Wählhebels 80 können die Kupplung 74 und die Bremse 75 in noch zu beschreibender Weise betätigt werden.

Wird die aus dem Gehäuse 70 ragende Eintriebswelle 79 rechtsdrehend angetrieben, werden die mit ihr kämmenden Planetenräder 71 in eine linksdrehende Bewegung versetzt. Die mit ihnen kämmenden Planetenräder 72 drehen dementsprechend rechts. Die Planetenräder 72 sind in Eingriff mit einer Austriebswelle 81, die mit der Eintriebswelle 8 des Getriebes 66 verbunden, vorzugsweise einstückig mit ihr ausgebildet ist. Wenn die Austriebswelle 81 stillsteht, wälzen sich die Planetenräder 72 auf der Austriebswelle 81 ab. Dies hat zur Folge, dass der Planetenradträger 73 in eine rechtsdrehende Bewegung versetzt wird.

Die Kupplung 74 ist beispielhaft eine Lamellenkupplung und hat Kupplungslamellen 82, die drehfest mit dem Planetenradträger 73 verbunden sind, und eintriebswellenseitige Kupplungslamellen 83, die zwischen die Lamellen 82 ragen.

Wird der Wählhebel 80 in die Stellung D gebracht, dann wird die Kupplung 74 geschlossen, wodurch die Eintriebswelle 69 mit dem Planetenradträger 73 verbunden wird. Der Planetenradträger 73 dreht dann mit der gleichen Drehzahl wie die Eintriebswelle 69. Die Planetenräder 71, 72 bleiben relativ zur Eintriebswelle 69 stehen und nehmen damit die Austriebswelle 81 rechtsdrehend mit.

Wird der Wählhebel 80 in die Stellung R gebracht, dann wird die Bremse 75 geschlossen. Über die Bremslamellen 76, 77 wird der Planetenradträger 73 infolge der Bremswirkung fest mit dem stehenden Gehäuse 70 verbunden. Die rechtsdrehenden Planetenräder 72 treiben die Austriebswelle 81 dementsprechend linksdrehend an.

Wird der Wählhebel 80 wieder zurück in die Stellung "N" gebracht, gibt er die Kupplung 74 und die Bremse 75 frei.

Das Drehrichtungsgetriebe 67 ist so ausgebildet, dass die Kupplung 74 und die Bremse 75 nicht gleichzeitig betätigt werden können.

Die Ölpumpe 79 wird über den Antrieb 78 von der Eintriebswelle 69 angetrieben.

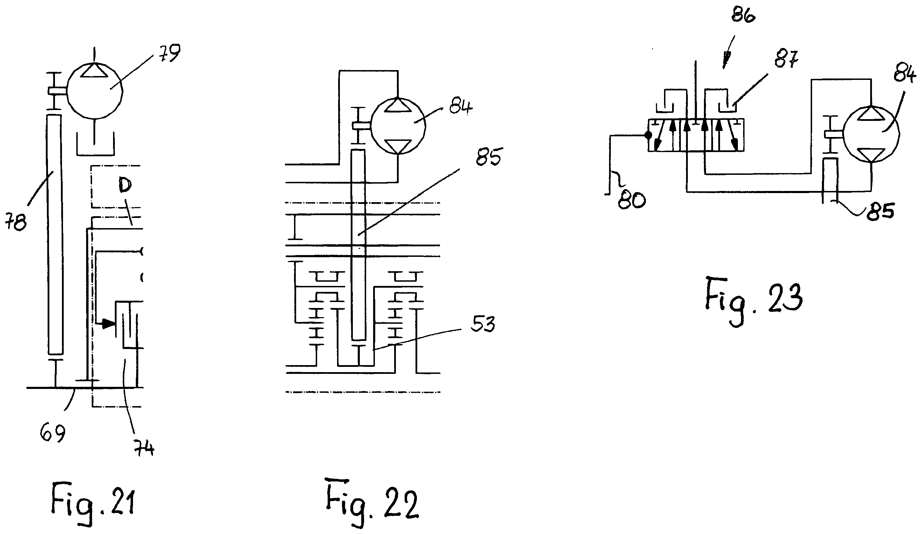

Das Koppelelement 53 des Getriebes 66 ist mit einem Leerlaufmotor 84 über einen Antrieb 85 verbunden, der beispielhaft ein endloser Ketten- oder Riementrieb sein kann. Der Leerlaufmotor 84 ist an ein Motorsteuerventil 86 angeschlossen, das durch den Wählhebel 80 betätigbar ist. In der in Fig. 23 dargestellten Neutralstellung "N" sind die beiden Ölseiten des Leerlaufmotors 84 gegen den Tank 87 geöffnet. Wird der Wählhebel 80 in die Stellung "D", was einer Vorwärtsfahrt des Fahrzeuges entspricht, verstellt, dann wird die entsprechende Ölseite des Leerlaufmotors 84 in noch zu beschreibender Weise mit Drucköl versorgt, während die abfließende Seite gegen den Tank 87 geöffnet wird. Wird umgekehrt der Wählhebel 80 in die Stellung "R", was einer Rückwärtsfahrt des Kraftfahrzeuges entspricht, verstellt, wird die entsprechend andere Ölseite des Leerlaufmotors 84 mit Drucköl versorgt, während das Öl dann über die andere Seite des Leerlaufmotors 84 zurück in den Tank 87 fließt.

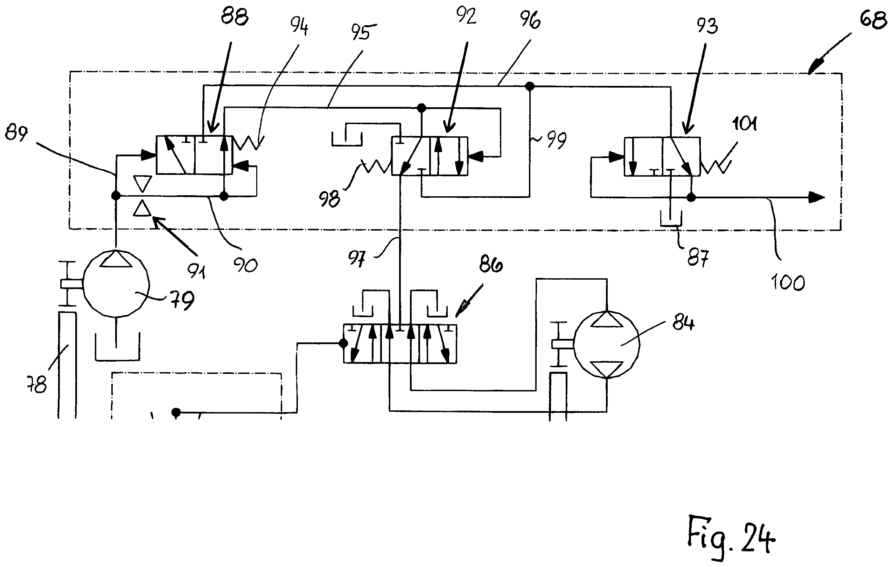

Wie die Fig. 18 und 24 zeigen, ist die Ölpumpe an ein Leerlauf-Regelventil 88 der Hydrauliksteuerung 68 angeschlossen. Das von der Ölpumpe 79 geförderte Öl wird über eine Leitung 89 der linken Seite des Kolbens des Regelventils 88 und über eine Leitung 90 der rechten Seite dieses Kolbens zugeführt. In der Leitung 90 sitzt eine Blende 91.

Das Leerlauf-Regelventil ist mit einem Druckregelventil 92 sowie einem Druckregelventil 93 verbunden, die Teil der Steuerung 68 sind. Das Motorsteuerventil 86 ist mit dem Druckregelventil 92 verbunden.

Befindet sich der anzutreibende Motor im Leerlauf, dann dreht die Eintriebswelle 69 des Drehrichtungsgetriebes 67 mit der Leerlaufdrehzahl. Über den Antrieb 78 wird die Ölpumpe 79 entsprechend angetrieben und fördert das Öl über die Leitung 89 in Richtung auf das Leerlauf-Regelventil 88. Da vor der Blende 91 ein höherer Öldruck herrscht als hinter der Blende, werden die beiden Seiten des Kolbens des Regelventils 88 mit dem entsprechenden Druck beaufschlagt. Auf die rechte Kolbenseite wirkt außerdem die Kraft der Druckfeder 94, mit der der Reaktionspunkt des Regelventils 88 eingestellt werden kann, bei welcher Kraft der Ventilkolben nach rechts verschoben wird.

Bei Leerlauf des Antriebes wird das von der Ölpumpe 79 geförderte Öl über die Leitung 90 und eine Leitung 95 dem Druckregelventil 92 zugeführt. Die an den anderen Anschluss des Leerlauf-Regelventils 88 angeschlossene Leitung 96, die zum Druckregelventil 93 führt, bleibt geschlossen.

Nimmt die Drehzahl der Eintriebswelle 69 des Drehrichtungsgetriebes 67 zu, steigt auch die Drehzahl der Ölpumpe 79, die entsprechend mehr Öl fördert. Dadurch steigt der in der Leitung 90 vor der Blende 91 entstehende Öldruck so stark an, dass der Ventilkolben gegen den Gegendruck nach rechts verschoben wird. Dadurch wird die Leitung 95 zum Druckregelventil 92 geschlossen und die Leitung 96 zum Druckregelventil 93 geöffnet.

Je nach Höhe der Federkraft ist ein höherer Öldruck erforderlich, um den Ventilkolben nach rechts zu verschieben. Ist die Druckfeder 94 stärker ausgelegt, strömt eine höhere Ölmenge durch das Leerlauf-Regelventil 88 zum Druckregelventil 92.

Das Druckregelventil 92 wird in der beschriebenen Weise vom Leerlauf-Regelventil 88 mit Drucköl versorgt. Dieses Drucköl wird vom Druckregelventil 92 über eine Leitung 97 an das Motorsteuerventil 86 weitergeleitet.

Der Ventilkolben des Druckregelventils 92 wird auf der linken Seite mittels der Druckfeder 98 beaufschlagt. Auf der gegenüberliegenden Kolbenseite wirkt der in der Leitung 95 anstehende Öldruck. Steigt der Öldruck in der Leitung 95 entsprechend stark an, ist der auf die rechte Kolbenseite des Druckregelventils 92 wirkende Druck größer als der auf die linke Kolbenseite wirkende Gegendruck. Dann wird der Ventilkolben nach rechts verschoben. Dann wird die Leitung 97 geschlossen und eine Leitung 99 freigegeben, die in die Leitung 96 zum Druckregelventil 93 mündet. Somit gelangt das Drucköl zum Druckregelventil 93. Mit der Druckfeder 98 wird somit der Funktionsdruck für den Leerlaufmotor 84 bestimmt, der an das Motorsteuerventil 86 angeschlossen ist.

Das Druckregelventil 93 regelt die Höhe des Schmierdruckes. Mit der entsprechenden Schmierölmenge werden die Lagerstellen und Funktionsteile des Getriebes geschmiert. Das Schmieröl gelangt in die Leitung 100. Der Kolben des Druckregelventils 93 ist auf der rechten Seite durch die Druckfeder 101 belastet. Mit ihr lässt sich der Schmieröldruck einstellen, bei dem der Kolben des Druckregelventils 93 nach links verschoben wird, wodurch die Leitung 96 zum Tank 87 hin freigegeben wird.

Das Drehrichtungsgetriebe 67 ist vor dem Getriebe 66 vorgesehen. Der Verbrennungsmotor des Kraftfahrzeuges erzeugt bei Leerlaufdrehzahl nur soviel Drehmoment oder Leistung, dass die Grundfunktion des Motors erfüllt wird. Der Verbrennungsmotor kann eine geringe Leistung abgeben, wenn diese erforderlich ist. Diese Abgabe der Leistung führt beim Drehrichtungsgetriebe 67 dazu, dass das aus der Leistung resultierende Drehmoment entsprechend dem Gesamtübersetzungsverhältnis des Drehrichtungsgetriebes 67 erhöht wird. Dies hätte zur Folge, dass sich das Kraftfahrzeug bei Leerlaufdrehzahl in Bewegung setzen würde. Dies wird dadurch verhindert, dass das Leerlauf-Drehmoment nicht an die Austriebswelle 9 weitergeleitet wird. Liegt an der Eintriebswelle 69/8 ein rechtsdrehend wirkendes Drehmoment an, dann liegt bei stehender Austriebswelle 9 am Koppelelement 53 ein rechtsdrehend wirksames Drehmoment an, wie anhand von Fig. 4 erläutert worden ist. Wird dem Koppelelement 53 ein rechtsdrehend wirksames zusätzliches Drehmoment zugeführt, werden das am Koppelelement 53 entstehende Koppelmoment KM und das im Getriebe 66 gebildete Stützmoment SM aufgehoben, wie anhand von Fig. 5 im Einzelnen erläutert worden ist. Durch das Aufheben von Koppelmoment KM und Stützmoment SM wird das durch den Eintrieb 69/8 eingeleitete Drehmoment beim Leerlauf des Verbrennungsmotors neutralisiert.

Dieses zusätzliche Drehmoment wird mit Hilfe des Leerlaufmotors 84 erzeugt. Im Leerlauf fördert die Ölpumpe 79 entsprechend der Leerlaufdrehzahl eine bestimmte Ölmenge, die über die Leitungen 89, 90, 95 durch das Leerlaufregelventil 88 und das Druckregelventil 92 über die Leitung 97 zum Motorsteuerventil 86 strömt. Steht der Wählhebel 80 in der Stellung "N", dann strömt dieses Öl in Richtung Tank 87 ab. Steht der Wählhebel 80 in der Stellung "D" oder "R", dann strömt das Öl an die entsprechende Ölseite des Leerlaufmotors 84 und treibt ihn an. Der Öldruck wird solange erhöht, bis er den eingestellten Wert erreicht und das Druckregelventil 92 abregelt. Der Leerlaufmotor 84 erzeugt ein Drehmoment, das er über den Antrieb 85 an das Koppelelement 53 des Getriebes 66 abgibt (Fig. 18).

Steigt die Drehzahl der Eintriebswelle 69/8 an, dann wird in der beschriebenen Weise der Öldruck in der Leitung 89 so weit erhöht, bis das Leerlauf-Regelventil 88 umschaltet. Dann wird die Verbindung zum Druckregelventil 92 geschlossen und zum Druckregelventil 93 geöffnet. Da das Druckregelventil 92 geschlossen ist, gelangt zum Motorsteuerventil 86 kein Drucköl mehr, wodurch der Leerlaufmotor 84 außer Funktion tritt und das Getriebe 66 in der beschriebenen Weise arbeitet.

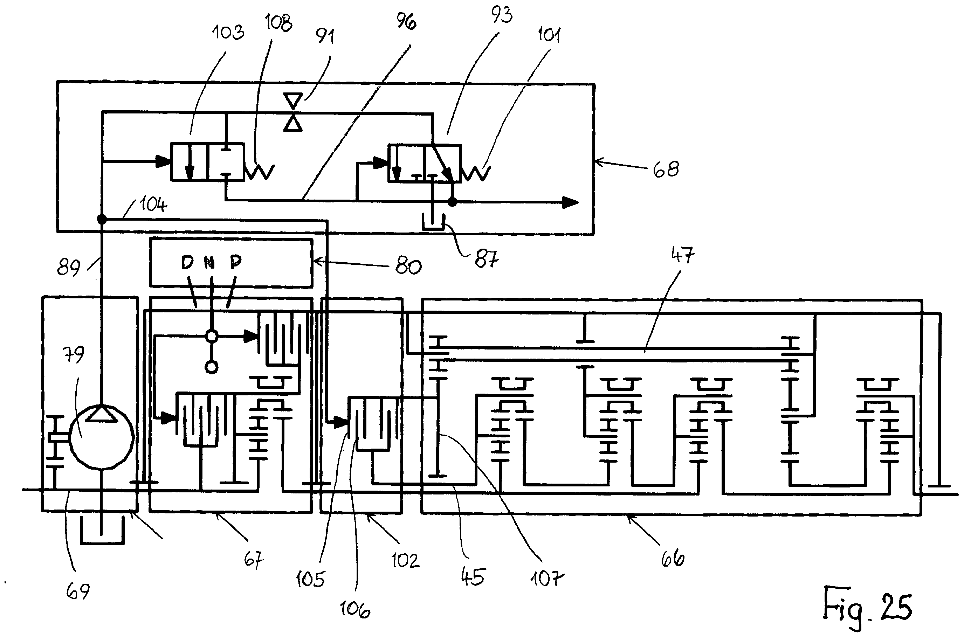

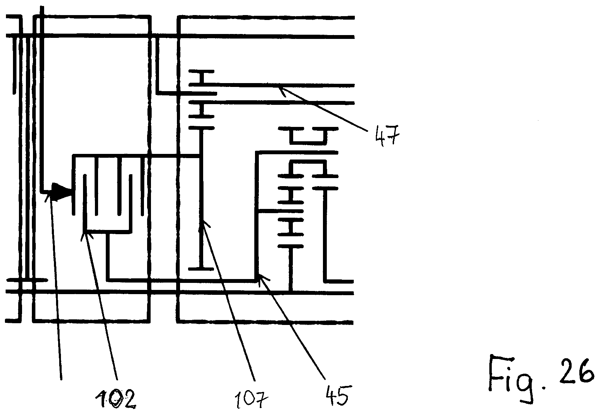

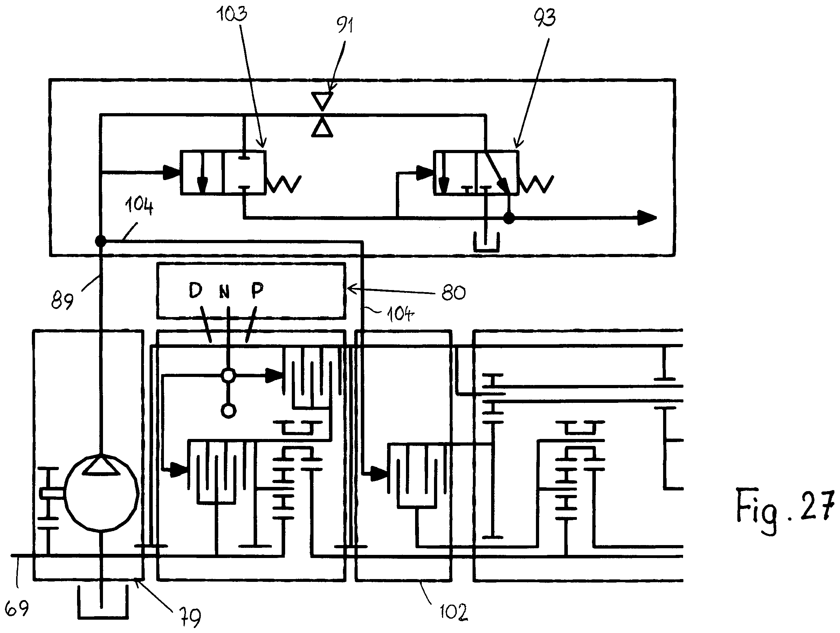

Die Fig. 25 bis 27 zeigen eine Ausführungsform, bei der das Getriebe 66 und das Drehrichtungsgetriebe 67 über eine Trennkupplung 102 miteinander verbunden sind. Das Drehrichtungsgetriebe 67 ist gleich ausgebildet wie bei der vorigen Ausführungsform. Das Getriebe 66 entspricht der Ausführungsform gemäß Fig. 4. Die Ölpumpe 79 wird von der Eintriebswelle 69 in der beschriebenen Weise angetrieben. Sie ist über die Leitung 89 mit einem Druckregelventil 103 verbunden, mit dem die Trennkupplung 102 betätigt wird. Von der Leitung 89 zweigt eine Leitung 104 ab, über die das Drucköl der Trennkupplung 102 zugeführt werden kann, die aus ineinandergreifenden Kupplungslamellen 105, 106 besteht. Die Kupplungslamellen 106 sind mit dem Koppelelement 45 des Getriebes 66 verbunden, während die Kupplungslamellen 105 mit einem Zahnrad 107 verbunden sind, das mit der Welle 47 in Eingriff ist.

Das Druckregelventil 103 ist Teil der Hydrauliksteuerung 68 und mit dem Druckregelventil 93 für die Schmierölregelung verbunden.

Die Ölpumpe 79 fördert bei der Leerlaufdrehzahl der Eintriebswelle 69 einen Ölstrom, der über die Leitung 89 in Richtung auf die Regelventile 93, 103 strömt. In der Leitung 89 befindet sich die Blende 91, die zu einem höheren Druck des Öls vor der Blende als hinter ihr führt. Vor dem Druckregelventil 103 zweigt die Leitung 104 von der Leitung 89 ab.

Befindet sich der Wählhebel 80 in der Stellung "N", dann wird dem Getriebe 66 keine Drehzahl und auch kein Drehmoment zugeführt, das heißt das Getriebe 66 steht still. Wird der Wählhebel 80 hingegen in die Stellung "D" oder "R" verstellt, erhält das Getriebe 66 eine der Drehzahl der Eintriebswelle 69 entsprechende Drehzahl. Dabei entsteht auch ein geringes Drehmoment, das in das Getriebe 66 eingeleitet wird, wodurch das Getriebe 66 seine Funktion aufnimmt.

Für eine Erhöhung des Drehmomentes ist es erforderlich, dass sich das Koppelmoment KM am Koppelelement 45 als Stützmoment SM abstützen kann, wie anhand von Fig. 5 erläutert worden ist. Ist eine solche Abstützung des Koppelmomentes KM am Koppelelement 45 nicht möglich, tritt auch keine Drehmomenterhöhung auf.

Die Weiterleitung des Stützmomentes SM vom Koppelelement 45 über das Zahnrad 107 auf die Welle 47 ist nur bei geschlossener Trennkupplung 102 möglich. Dreht der Verbrennungsmotor nur mit geringerer Drehzahl und fördert dementsprechend die Ölpumpe 79 nur eine geringe Ölmenge, erfolgt keine Betätigung der Trennkupplung 102, die dadurch geöffnet bleibt.

Erhöht sich die Drehzahl der Eintriebswelle 69, nimmt auch die Pumpendrehzahl zu. Die Ölpumpe 79 fördert dementsprechend eine größere Ölmenge in die Leitung 89. Dies führt dazu, dass vor der Blende 91 ein entsprechend hoher Staudruck entsteht. Dieser Staudruck wirkt über die Leitung 104 auf die Trennkupplung 102, die durch diesen hohen Öldruck betätigt wird. Die Kupplungslamellen 105, 106 werden gegeneinander gedrückt und damit die Trennkupplung 102 geschlossen. Dadurch werden das Zahnrad 107 und das Koppelelement 45 drehfest miteinander verbunden, so dass eine drehmomentübertragende Verbindung zwischen dem Zahnrad 107 und dem Koppelelement hergestellt wird. Dadurch wird der Lastpfad vom Koppelmoment KM zum Stützmoment SM geschlossen.

Das Druckregelventil 103 hat die Aufgabe, den maximalen Öldruck zu begrenzen. Der Kolben des Druckregelventils 103 wird durch die Druckfeder 108 nach links belastet. Dadurch ist die Verbindung des Druckregelventils 103 mit dem Druckregelventil 93 unterbrochen. Überschreitet der vom Drucköl in der Leitung 89 auf die linke Kolbenseite ausgeübte Öldruck den auf die rechte Kolbenseite ausgeübten Gegendruck, wird der Kolben des Druckregelventils 103 nach rechts verschoben. Dadurch wird die Leitung 96 vom Druckregelventil 103 zum Druckregelventil 93 geöffnet, so dass beim Öffnen des Druckregelventils 103 das Öl direkt zur Schmierung verwendet werden kann.

Das Druckregelventil 93 begrenzt wie bei der vorigen Ausführungsform den maximalen Schmierdruck. Er wirkt über die Leitung 96 auf die linke Kolbenseite des Druckregelventils 93. Auf die rechte Kolbenseite wirkt die Kraft der Druckfeder 101. Überschreitet der Druck in der Leitung 96 die Federkraft, wird der Kolben nach rechts verschoben, wodurch die Verbindung zum Tank 87 geöffnet wird und das Öl in den Tank 87 abströmen kann.

Sinkt die Drehzahl der Eintriebswelle 69 und damit die Drehzahl der Ölpumpe 79, nimmt der Öldruck in der Leitung 89 wieder ab, so dass der Kolben des Druckregelventils 103 durch die Druckfeder 108 nach links verschoben wird. Aufgrund des geringen Öldruckes in der Leitung 89 wird auch der Betätigungsdruck für die Trennkupplung 102 unterschritten, so dass die Trennkupplung 102 geöffnet und damit die Drehmoment übertragende Verbindung zwischen dem Koppelelement 45 und dem Zahnrad 107 unterbrochen wird. Der Stützmoment-Lastpfad ist somit unterbrochen.

Im Übrigen arbeitet diese Anordnung gleich wie das vorige Ausführungsbeispiel.

## Patentansprüche

1. Getriebe mit mindestens einem Eintriebselement (8), das über Getriebeelemente mit wenigstens einem Austriebselement (9) antriebsverbunden ist, von denen eines ein Regelelement (12) ist, mit dem die Drehzahl des Eintriebselementes (8) zur Weiterleitung an das Austriebselement (9) derart veränderbar ist, dass die Drehzahl des Austriebselementes (9) erhöht wird, wenn die Drehzahl des Regelelementes (12) abnimmt, das über ein Koppelelement (24) mit dem Eintriebselement (8) antriebsverbunden ist, wobei das Koppelelement (24) Teil einer Koppelstufe (3) ist, die als Umlaufgetriebe ausgebildet ist, wobei das Getriebe eine Koppelschwinge (4) aufweist, die als Umlaufgetriebe ausgebildet ist und ein Drehrichtungs-Umlenkgetriebe bildet, wobei das Regelelement (12) Teil eines Umlenkgetriebes ist,
**dadurch gekennzeichnet, dass** das Eintriebselement (8) von einem Sonnenrad (21) umgeben ist, das mit dem Koppelelement (24) und mit dem Regelelement (12) über Planetenräder (22, 19) in Eingriff ist, von denen die mit dem Regelelement (12) in Eingriff befindlichen Planetenräder (19) auf gehäusefesten Planetenradträgern (20) sitzen, und dass das Koppelelement (24) das Sonnenrad (21) mit Planetenrädern (27) der Koppelschwinge (4) koppelt, die auf gehäusefesten Planetenträgern (28) gelagert sind.

2. Getriebe mit mindestens einem Eintriebselement (8), das über Getriebeelemente mit wenigstens einem Austriebselement (9) antriebsverbunden ist, von denen eines ein Regelelement (53) ist, mit dem die Drehzahl des Eintriebselementes (8) zur Weiterleitung an das Austriebselement (9) derart veränderbar ist, dass die Drehzahl des Austriebselementes (9) erhöht wird, wenn die Drehzahl des Regelelementes (53) abnimmt, das über ein Koppelelement (45) mit dem Eintriebselement (8) antriebsverbunden ist, wobei das Koppelelement (45) Teil einer Koppelstufe (3) ist, die als Umlaufgetriebe ausgebildet ist, wobei das Getriebe eine Koppelschwinge (4) aufweist, die als Umlaufgetriebe ausgebildet ist und ein Drehrichtungs-Umlenkgetriebe bildet, wobei das Regelelement (53) Teil eines Umlenkgetriebes ist,
**dadurch gekennzeichnet, dass** das Eintriebselement (8) von einem Sonnenrad (48) umgeben ist, das durch das Koppelelement (45) mit einer im Gehäuse (10) drehbar gelagerten Welle (47) gekoppelt ist, die das Koppelelement (45) mit Planetenrädern (60) verbindet, die drehbar auf gehäusefesten Stegen (61) gelagert und in einer Stützstufe (5) mit einem Sonnenrad (59) in Eingriff sind, das über Planetenräder (58) mit dem Austriebselement (9) antriebsverbunden ist.

3. Getriebe nach Anspruch 1,
**dadurch gekennzeichnet, dass** das Koppelelement (24) über ein Stützelement (30) mit dem Austriebselement (9) antriebsverbunden ist.

4. Getriebe nach Anspruch 3,
**dadurch gekennzeichnet, dass** sich das Stützelement (30) bzw. die Welle (47) zur Abstützung des Koppelelementes (24, 45) an einer Zwischenwelle (17, 56) abstützt, die zusammen mit dem Stützelement (30) bzw. der Welle (45) das Austriebsmoment erzeugt.

5. Getriebe nach Anspruch 3 oder 4,
**dadurch gekennzeichnet, dass** das Stützelement (30) Teil einer Stützstufe ist, die als Umlaufgetriebe ausgebildet ist.

6. Getriebe nach einem der Ansprüche 2 bis 5,
**dadurch gekennzeichnet, dass** die Welle (47) mit dem Austriebselement (9) über ein Zwischengetriebe (60, 59, 58) antriebsverbunden ist.

## Claims

1. Gearbox with at least one input element (8), which is in driving connection with at least one output element (9), of which one is a regulating element (12), with which the rotational speed of the input element (8) can be changed for passing on to the output element (9) in such a way that the rotational speed of the output element (9) is increased when the rotational speed of the regulating element (12) decreases, which is in driving connection via a coupling element (24) with the input element (8), wherein the coupling element (24) is part of a coupling stage (3), which is in the form of a planetary gear, wherein the gearbox comprises a coupling rocker (4), which is in the form of a planetary gear and forms a rotational direction reversing gear, wherein the regulating element (12) is part of a reversing gear,
**characterised in that** the input element (8) is surrounded by a sun wheel (21) which is in engagement with the coupling element (24) and with the regulating element (12) via planet wheels (22, 19), of which the planet wheels (19) in engagement with the regulating element (12) are mounted on planet gear supports (20) fixed to the housing, and **in that** the coupling element (24) connects the sun wheel (21) with planet wheels (27) of the coupling rocker (4) which are mounted on planet gear supports (28) fixed to the housing.

2. Gearbox with at least one input element (8), which is in driving connection with at least one output element (9), of which one is a regulating element (53), with which the rotational speed of the input element (8) can be changed for passing on to the output element (9) in such a way that the rotational speed of the output element (9) is increased when the rotational speed of the regulating element (53) decreases, which is in driving connection via a coupling element (45) with the input element (8), wherein the coupling element (45) is part of a coupling stage (3), which is in the form of a planetary gear, wherein the gearbox comprises a coupling rocker (4), which is in the form of a planetary gear and forms a rotational direction reversing gear, wherein the regulating element (53) is part of a reversing gear,
**characterised in that** the input element (8) is surrounded by a sun wheel (48) which is coupled by way of the coupling element (45) to a shaft (47) which is rotationally mounted in the housing (10) and connects the coupling element (45) with planetary gears (60) which are rotationally mounted on web (61) attached to the housing and in a support stage (5) are in engagement with a sun wheel (59) which by way of planetary wheels (58) is in driving connection with the output element (9).

3. Gearbox according to claim 1, **characterised in that** the coupling element (24) is by means of a support element (30) in driving connection with the output element (9).

4. Gearbox according to claim 3, **characterised in that** to support the coupling element (24, 45) the support element (30) respectively the shaft (47) is supported on an intermediate shaft (17, 56) which together with the support element (30) respectively the shaft (45) produces the output torque.

5. Gearbox according to claim 3 or 4, **characterised in that** the support element (30) is part of a support stage which is in the form of a planetary gear.

6. Gearbox according to claims 2 to 5, **characterised in that** the shaft (47) is in driving connection with the output element (9) via an intermediate gearbox (60, 59, 58).

## Revendications

1. Boîte de vitesses avec au moins un élément d'entrée (8), qui par l'intermédiaire d'éléments de transmission est relié en entraînement avec au moins un élément de sortie (9) dont l'un est un élément de réglage (12) à l'aide duquel la vitesse de rotation de l'élément d'entrée (8) pour la retransmission sur l'élément de sortie (9) est variable de telle sorte que la vitesse de rotation de l'élément de sortie (9) augmente lorsque la vitesse de rotation de l'élément de réglage (12) diminue, qui par l'intermédiaire d'un élément de couplage (24) est relié en entraînement avec l'élément d'entrée (8), l'élément de couplage (24) étant une partie d'un étage de couplage (3) qui est conçue sous la forme d'un engrenage épicycloïdal, la boîte de vitesses comportant une coulisse de couplage (4) qui est conçue sous la forme d'un engrenage épicycloïdal et qui forme une transmission de renvoi du sens de rotation, l'élément de réglage (12) étant une partie d'une transmission de renvoi,
**caractérisé en ce que** l'élément d'entrée (8) est entouré d'une roue solaire (21) qui par l'intermédiaire d'engrenages planétaires (22, 19) est en engagement avec l'élément de couplage (24) et avec l'élément de réglage (12) dont les engrenages planétaires (19) se trouvant en engagement avec l'élément de réglage (12) reposent sur des supports d'engrenages planétaires (20) solidaires du boîtier, et **en ce que** l'élément de couplage (24) couple la roue solaire (21) avec des engrenages planétaires (27) de la coulisse de couplage (4) qui sont logés sur des supports d'engrenages planétaires (28) solidaires du boîtier.

2. Boîte de vitesses avec au moins un élément d'entrée (8), qui par l'intermédiaire d'éléments de transmission est relié en entraînement avec au moins un élément de sortie (9) dont l'un est un élément de réglage (53) à l'aide duquel la vitesse de rotation de l'élément d'entrée (8) pour la retransmission sur l'élément de sortie (9) est variable de telle sorte que la vitesse de rotation de l'élément de sortie (9) augmente lorsque la vitesse de rotation de l'élément de réglage (53) diminue, qui par l'intermédiaire d'un élément de couplage (45) est relié en entraînement avec l'élément d'entrée (8), l'élément de couplage (45) étant une partie d'un étage de couplage (3) qui est conçue sous la forme d'un engrenage épicycloïdal, la boîte de vitesses comportant une coulisse de couplage (4) qui est conçue sous la forme d'un engrenage épicycloïdal et qui forme une transmission de renvoi du sens de rotation, l'élément de réglage (53) étant une partie d'un transmission de renvoi,
**caractérisé en ce que** l'élément d'entrée (8) est entouré par une roue solaire (48) qui par l'élément de couplage (45) est couplée avec un arbre (47) logé en rotation dans le boîtier (10), qui relie l'élément de couplage (45) avec des engrenages planétaires (60) qui sont logés en rotation sur des barrettes (61) solidaires du boîtier et qui dans un étage d'appui (5) sont en engagement avec une roue solaire (59) qui par l'intermédiaire d'engrenages planétaires (58) est en liaison par entraînement avec l'élément de sortie (9) .

3. Boîte de vitesses selon la revendication 1, **caractérisé en ce que** l'élément de couplage (24) est en liaison par entraînement avec l'élément de sortie (9) par l'intermédiaire d'un élément d'appui (30).

4. Boîte de vitesses selon la revendication 3, **caractérisé en ce que** pour soutenir l'élément de couplage (24, 45), l'élément d'appui (30) ou l'arbre (47) s'appuie sur un arbre intermédiaire (17, 56), qui en commun avec l'élément d'appui (30) ou avec l'arbre (45) génère le couple de sortie.

5. Boîte de vitesses selon la revendication 3 ou 4, **caractérisé en ce que** l'élément d'appui (30) est une partie d'un étage d'appui, qui est conçu sous la forme d'un engrenage épicycloïdal.

6. Boîte de vitesses selon l'une quelconque des revendications 2 à 5, **caractérisé en ce que** l'arbre (47) est relié en entraînement avec l'élément de sortie (9) via une transmission intermédiaire (60, 59, 58).
